# EUROPEAN PATENT APPLICATION

(11) **EP 3 315 187 A1**
(43) Date of publication of application: **02.05.2018**
(21) Application number: 16814486.3
(22) Date of filing: 24.06.2016
(51) Int. Cl.: B01D 53/86, B01D 53/90, B01J 23/46, B01J 23/652, F27D 17/00

(54) **DENITRATION DEVICE AND DENITRATION METHOD**

(30) Priority: 24.06.2015 JP 2015126821
(71) Applicant: Mitsubishi Hitachi Power Systems, Ltd., Yokohama-shi, Kanagawa 220-8401 (JP)
(72) Inventor: KIYOSAWA Masashi, Yokohama-shi Kanagawa 220-8401 (JP); MASUDA Tomotsugu, Yokohama-shi Kanagawa 220-8401 (JP); ISOBE Tomoaki, Yokohama-shi Kanagawa 220-8401 (JP); HIGASHINO Koji, Tokyo 108-8215 (JP)
(74) Representative: Henkel, Breuer & Partner
(86) International application number: PCT/JP2016/068812
(87) International publication number: WO 2016/208717

(57) **Abstract**

A denitration device (1) is provided with a denitration reactor (10), a heat exchanger (15), and a heater (20). The denitration reactor (10) is filled with an Ir-containing catalyst (11) for reducing the NOx contained in exhaust gas (EX). The heat exchanger (15) performs heat exchange between pre-denitration gas (EXb) flowing into the denitration reactor (10) and denitrated gas (EXa) flowing out of the denitration reactor (10), cooling the denitrated gas (EXa) and heating the pre-denitration gas (EXb). The heater (20) heats the pre-denitration gas (EXb) after the same has passed through the heat exchanger (15), the heating amount being adjustable.

## Description

### [Technical Field]

The present invention relates to a denitration device and a denitration method through which nitrogen oxides in an exhaust gas are treated.

Priority is claimed on Japanese Patent Application No. 2015-126821, filed June 24, 2015, the content of which is incorporated herein by reference.

### [Background Art]

When nitrogen oxides (hereinafter referred to as NOx) in an exhaust gas are treated, generally, the NOx is reduced to N₂ and H₂O. As a method of reducing NOx, an ammonia catalytic reduction method is widely known.

In the ammonia catalytic reduction method, the cost of ammonia as a reducing agent and the heating costs for increasing the temperature of an exhaust gas are high. That is, in the ammonia catalytic reduction method, the running costs are high. Therefore, in the following Patent Document 1, a method in which a catalyst containing Iridium (Ir) is used and NOx is reduced using CO and HC in an exhaust gas has been proposed.

### [Citation List]

### [Patent Document]

[Patent Document 1]
Japanese Unexamined Patent Application, First Publication No. 2004-033989

### [Summary of Invention]

### [Technical Problem]

When the catalyst described in Patent Document 1 is used and CO and HC in an exhaust gas are used, it is possible to reduce the running costs for reducing NOx.

In the treatment of nitrogen oxides, when flowing of an exhaust gas into a treatment device starts, it is desirable that nitrogen oxides be immediately treated in the treatment device, and the nitrogen oxides be stably treated thereafter. Further, in the treatment of nitrogen oxides, it is desirable to reduce running costs.

Therefore, an object of the present invention is to provide a technology through which it is possible to reduce a time lag from when flowing of an exhaust gas starts until a treatment of nitrogen oxides starts while reducing running costs and it is possible to stably treat nitrogen oxides thereafter.

### [Solution to Problem]

In order to achieve the above object, there is provided a denitration device according to a first aspect of the invention, which includes a denitration reactor filled with a catalyst containing Ir which reduces nitrogen oxides contained in an exhaust gas; a heat exchanger configured to exchange heat between a pre-denitration gas and a denitrified gas, and cool the denitrified gas and heat the pre-denitration gas, the pre-denitration gas beeing an exhaust gas that has not flowed into the denitration reactor, the denitrified gas beeing an exhaust gas flowing out from the denitration reactor; and a heater that is able to regulate a heating amount by which the pre-denitration gas that has passed through the heat exchanger is heated.

In the denitration device, since NOx is reduced using a catalyst containing Ir without using ammonia, it is possible to reduce running costs.

In addition, in the denitration device, when a temperature of a gas flowing into the denitration reactor is low, since the gas is heated by the heater, even if flowing of the exhaust gas into the denitration device starts, it is possible to reduce a time lag from when flowing starts until reduction of NOx contained in the exhaust gas starts. Further, in the denitration device, since the pre-denitration gas is heated by the heat exchanger, it is possible to reduce thermal energy consumption in the heater that heats the pre-denitration gas.

In order to achieve the above object, there is provided a denitration device according to a second aspect of the invention in which the denitration device of the first aspect includes a thermometer configured to determine the temperature of a gas that has not flowed into the denitration reactor on the side of the denitration reactor relative to the heater, and the heater includes a heating unit configured to heat a gas that flows into the denitration reactor and a heating amount regulating unit configured to regulate a heating amount produced by the heating unit so that a temperature determined by the thermometer falls within a target temperature range.

In the denitration device, since a heating amount produced by the heating unit is regulated according to the temperature determined by the thermometer, the temperature of the pre-denitration gas flowing into the denitration reactor is stabilized and NOx contained in the pre-denitration gas can be reduced continuously and stably. Further, it is possible to reduce unnecessary heating of the heating unit and it is possible to reduce running costs.

In any one of the denitration devices including the heating amount regulating unit, the heating unit may include a burner configured to inject a combustible fluid. The heating amount regulating unit may include a flow rate regulating valve configured to regulate a flow rate of the combustible fluid supplied to the burner and a controller configured to control a valve opening degree of the flow rate regulating valve according to the temperature determined by the thermometer.

In order to achieve the above object, there is provided a denitration device according to a third aspect of the invention in which, in the denitration device of the second aspect, the heating amount regulating unit regulates a heating amount produced by the heating unit so that the temperature determined by the thermometer falls within the target temperature range before the exhaust gas flows into the denitration reactor from a gas generation source that has started to operate.

In the denitration device, when a temperature of a gas flowing into the denitration reactor is low before flowing of the exhaust gas into the denitration reactor starts, since the gas is heated by the heater, it is possible to reduce NOx contained in the exhaust gas immediately from when flowing of the exhaust gas starts.

In order to achieve the above object, there is provided a denitration device according to a fourth aspect of the invention in which, in the denitration device of the second or third aspect, the target temperature range is within a range of 200 to 300 °C.

In order to achieve the above object, there is provided a denitration device according to a fifth aspect of the invention in which the denitration device according to any one of the second to fourth aspects includes a first densitometer configured to determine the concentration of nitrogen oxides in the pre-denitration gas; and a second densitometer configured to determine the concentration of nitrogen oxides in the denitrified gas, and the heating amount regulating unit includes a denitration ratio calculation unit configured to calculate a denitration ratio in the denitration reactor from the concentration of nitrogen oxides determined by the first densitometer and the concentration of nitrogen oxides determined by the second densitometer; a target changing unit configured to change the target temperature range so that the denitration ratio increases; and an instruction unit configured to instruct the heating unit regarding a heating amount produced by the heating unit so that the temperature determined by the thermometer falls within the target temperature range.

Here, the target changing unit searches for a temperature range in which the denitration ratio increases regarding a temperature range of a gas immediately before it flows into the denitration reactor, and may set the temperature range in which the denitration ratio increases as the target temperature range.

In the catalyst containing Ir, the gas temperature at the inlet of the denitration reactor at which the maximum denitration ratio is reached increases with the elapse of time. In addition, when the hydrogen concentration or the carbon monoxide concentration in the exhaust gas changes, the temperature range in which the denitration reaction occurs in the denitration reactor changes. In the denitration device, the target temperature range changes so that the denitration ratio calculated by the denitration ratio calculation unit increases. As a result, even if the catalyst deteriorates with the elapse of time or the hydrogen concentration or the carbon monoxide concentration in the exhaust gas changes, the temperature of the pre-denitration gas regulated by the heating amount regulating unit changes, and a decrease in the denitration ratio in the denitration reactor can be minimized.

In order to achieve the above object, there is provided a denitration device according to a sixth aspect of the invention in which, in the denitration device of the fifth aspect, the target changing unit changes the target temperature range so that the denitration ratio is equal to or greater than a predetermined value.

In the denitration device, even if the catalyst deteriorates with the elapse of time, the denitration ratio in the denitration reactor can be maintained at a predetermined value or greater.

In order to achieve the above object, there is provided a denitration device according to a seventh aspect of the invention in which the denitration device according to any one of the second to sixth aspects includes a performance improving gas supply device configured to supply a denitration performance improving gas containing at least one of hydrogen and carbon monoxide to the pre-denitration gas.

In the denitration device, when the denitration performance improving gas is supplied to the pre-denitration gas, it is possible to widen the temperature range in which the denitration reaction occurs in the denitration reactor and it is possible to facilitate the denitration reaction in the denitration reactor. Further, in the denitration device, since heat is generated when hydrogen or carbon monoxide contained in the denitration performance improving gas is oxidized in the denitration reactor, while the denitration performance improving gas is supplied, it is possible to increase an amount of heat generation in the denitration reactor. Therefore, in the denitration device, a heating amount by which the pre-denitration gas is heated in the heat exchanger increases, and it is possible to reduce a heating amount of the heater. Further, in the denitration device, when an increment of the heating amount is recovered, it is possible to effectively use an increment of the heating amount.

In order to achieve the above object, there is provided a denitration device according to an eighth aspect of the invention in which the denitration device of the seventh aspect includes a densitometer configured to determine the concentration of nitrogen oxides in the denitrified gas, and the performance improving gas supply device includes a performance improving gas flow rate regulating valve configured to regulate a flow rate of the denitration performance improving gas supplied to the pre-denitration gas and a controller configured to control a valve opening degree of the performance improving gas flow rate regulating valve according to the concentration of nitrogen oxides determined by the densitometer.

In order to achieve the above object, there is provided a denitration device according to a ninth aspect of the invention in which, in the denitration device of the seventh or eighth aspect, the target temperature range is within a range of 170 to 300 °C.

In order to achieve the above object, there is provided a denitration device according to a tenth aspect of the invention in which, in the denitration device according to any one of the first to ninth aspects, the denitration reactor includes a reactor vessel, the catalyst that is distributed and disposed in a flow direction of the exhaust gas in the reactor vessel, and a temperature distribution regulator configured to regulate a temperature distribution of the catalyst so that a temperature of the catalyst at all positions in the flow direction falls within a predetermined temperature range.

In the denitration device, the denitration reactor is a so-called isothermal reactor. Therefore, the temperature of the catalyst at all positions in the flow direction of the exhaust gas, for example, a position on the upstream side and a position on the downstream side of a flow of the exhaust gas of the reactor, falls within a predetermined temperature range. As a result, it is possible to increase the denitration ratio at the outlet of the denitration reactor.

In order to achieve the above object, there is provided a denitration device according to an eleventh aspect of the invention in which, in the denitration device of the tenth aspect, the temperature distribution regulator includes a heat exchanger configured to exchange heat between the catalyst or the exhaust gas in the reactor vessel and a refrigerant.

In order to achieve the above object, there is provided a denitration device according to a twelfth aspect of the invention in which the denitration device according to any one of the first to eleventh aspects includes an exhaust heat recovery device configured to exchange heat between the denitrified gas that flows out from the denitration reactor and has not flowed into the heat exchanger and a refrigerant, and cools the denitrified gas and heats the refrigerant.

In order to achieve the above object, there is provided a denitration device according to a thirteenth aspect of the invention in which the denitration device according to any one of the first to eleventh aspects includes a bypass line through which the denitrified gas that flows out from the denitration reactor and has not flowed into the heat exchanger bypasses the heat exchanger; and a bypass flow rate regulator configured to regulate the flow rate of the denitrified gas that flows through the bypass line.

In order to achieve the above object, there is provided a denitration device according to a fourteenth aspect of the invention in which the denitration device of the thirteenth aspect includes a bypass exhaust heat recovery device that is disposed in the bypass line and on the downstream side of the flow of the denitrified gas relative to the bypass flow rate regulator, exchanges heat between the denitrified gas and a refrigerant, and cools the denitrified gas and heats the refrigerant.

In any one of the above denitration devices, the denitration reactor is filled with an Ir-Tungsten (W)-based catalyst containing Ir and W or an Ir-based catalyst containing only Ir without W as the catalyst.

In this case, the denitration reactor may be filled with the Ir-based catalyst.

In order to achieve the above object, there is provided a denitration device according to a fifteenth aspect of the invention in which any one of the above denitration devices includes a bypass line through which the pre-denitration gas bypasses the denitration reactor and converges with the denitrified gas; and a bypass flow rate regulator configured to regulate a flow rate of the pre-denitration gas that flows through the bypass line.

In order to achieve the above object, there is provided an exhaust gas treatment facility according to an aspect of the invention which includes any one of the above denitration devices and a dust collector configured to remove dust in the exhaust gas that has not flowed into the denitration device.

Here, the exhaust gas treatment facility includes a desulfurizer configured to remove sulfur oxides in the exhaust gas that has not flowed into the denitration device.

In order to achieve the above object, there is provided a denitration method according to a sixteenth aspect of the invention which includes a denitration process in which nitrogen oxides contained in an exhaust gas are reduced by a catalyst containing Ir in a denitration reactor; a heat exchanging process in which a pre-denitration gas which is an exhaust gas that has not been treated in the denitration process exchanges heat with a denitrified gas which is an exhaust gas that is treated in the denitration process, and the denitrified gas is cooled, and the pre-denitration gas is heated; and a temperature regulating process in which a temperature of the pre-denitration gas is regulated so that the temperature of the pre-denitration gas falls within a target temperature range.

In the denitration method, since NOx is reduced using a catalyst containing Ir without using ammonia, it is possible to reduce running costs.

In addition, in the denitration method, when a temperature of a gas flowing into the denitration reactor is low, since the temperature of the exhaust gas is regulated to be within the target temperature range in the temperature regulating process, even if flowing of the exhaust gas into the denitration reactor starts, it is possible to reduce a time lag from when flowing of the exhaust gas starts until reduction of NOx contained in the exhaust gas starts. Moreover, in the denitration method, since the pre-denitration gas is heated also in the heat exchanging process, it is possible to reduce thermal energy consumption in the temperature regulating process in which the pre-denitration gas may be heated.

Here, in the denitration method, in the temperature regulating process, the combustible fluid is combusted, the pre-denitration gas is heated, and the flow rate of the combustible fluid combusted is regulated according to the temperature of the pre-denitration gas.

In order to achieve the above object, there is provided a denitration method according to a seventeenth aspect of the invention in which, in the denitration method of the sixteenth aspect, in the temperature regulating process, a temperature of the gas that flows into the denitration reactor is regulated so that the temperature of the gas flowing into the denitration reactor falls within a target temperature range before the exhaust gas flows into the denitration reactor from a gas generation source that has started to operate.

In order to achieve the above object, there is provided a denitration method according to an eighteenth aspect of the invention in which, in the denitration method according to the sixteenth or seventeenth aspect, the target temperature range is within a range of 200 to 300 °C.

In order to achieve the above object, there is provided a denitration method according to a nineteenth aspect of the invention in which, in the denitration method according to any one of the sixteenth to eighteenth aspects, in the temperature regulating process, a concentration of nitrogen oxides in the pre-denitration gas and a concentration of nitrogen oxides in the denitrified gas are determined; the denitration ratio in the denitration reactor is calculated from the concentration of nitrogen oxides in the pre-denitration gas and the concentration of nitrogen oxides in the denitrified gas; the target temperature range changes so that the denitration ratio increases; and the temperature of the pre-denitration gas is regulated so that the temperature of the pre-denitration gas falls within the target temperature range.

Here, in the temperature regulating process, regarding a temperature range of a gas immediately before it flows into the denitration reactor, a temperature range in which the denitration ratio increases is searched for, and this temperature range in which the denitration ratio increases is set as the target temperature range.

In order to achieve the above object, there is provided a denitration method according to a twentieth aspect of the invention in which, in the denitration method of the nineteenth aspect, in the temperature regulating process, the target temperature range changes so that the denitration ratio is equal to or greater than a predetermined value.

In order to achieve the above object, there is provided a denitration method according to a twenty-first aspect of the invention in which, in the denitration method according to any one of the sixteenth to twentieth aspects, a performance improving gas supply process in which a denitration performance improving gas containing at least one of hydrogen and carbon monoxide is supplied to the pre-denitration gas is performed.

In order to achieve the above object, there is provided a denitration method according to a twenty-second aspect of the invention in which, in the denitration method of the twenty-first aspect, in the performance improving gas supply process, the concentration of nitrogen oxides in the denitrified gas is determined, and the flow rate of the denitration performance improving gas supplied to the pre-denitration gas is regulated according to the concentration of nitrogen oxides.

In order to achieve the above object, there is provided a denitration method according to a twenty-third aspect of the invention in which, in the denitration method of the twenty-first or twenty-second aspect, the target temperature range is within a range of 170 to 300 °C.

In order to achieve the above object, there is provided a denitration method according to a twenty-fourth aspect of the invention in which, in the denitration method according to any one of the sixteenth to twenty-third aspects, the denitration reactor includes a reactor vessel and the catalyst that is distributed and disposed in a flow direction of the exhaust gas in the reactor vessel, and a temperature distribution regulating process in which a temperature distribution of the catalyst is regulated so that the temperature of the catalyst at all positions in the flow direction falls within a predetermined temperature range is performed.

In order to achieve the above object, there is provided a denitration method according to a twenty-fifth aspect of the invention in which, in the denitration method according to any one of the sixteenth to twenty-fourth aspects, the temperature regulating process includes an exhaust heat recovering process in which the denitrified gas that is treated in the denitration process and of which heat is not exchanged in the heat exchanging process exchanges heat with a refrigerant, and the denitrified gas is cooled, and the refrigerant is heated.

In order to achieve the above object, there is provided a denitration method according to a twenty-sixth aspect of the invention in which, in the denitration method according to any one of the sixteenth to twenty-fifth aspects, the temperature regulating process includes a bypass process in which a pre-denitration gas does not exchange heat with at least a part of the denitrified gas of which heat is not exchanged with the pre-denitration gas in the heat exchanging process.

In order to achieve the above object, there is provided a denitration method according to a twenty-seventh aspect of the invention in which, in the denitration method according to any one of the sixteenth to twenty-fifth aspects, the temperature regulating process includes a bypass process in which at least a part of the pre-denitration gas converges with the denitrified gas.

In addition, in any one of the above denitration methods, the catalyst is an Ir-W-based catalyst containing Ir and W or an Ir-based catalyst containing only Ir without W as the catalyst.

### [Advantageous Effects of Invention]

In an aspect according to the present invention, it is possible to reduce a time lag from when flowing of an exhaust gas starts until a treatment of nitrogen oxides starts, and it is possible to stably treat nitrogen oxides thereafter.

### [Brief Description of Drawings]

Fig. 1 is a system diagram of a denitration device according to a first embodiment of the present invention.
Fig. 2 is a graph showing the relationship between an inlet temperature and a denitration ratio of a catalyst according to one embodiment of the present invention.
Fig. 3 is a sequence diagram of the denitration device according to the first embodiment of the present invention.
Fig. 4 is a system diagram of a denitration device according to a second embodiment of the present invention.
Fig. 5 is a graph showing the relationship between an inlet temperature and a denitration ratio of catalysts when no denitration performance improving gas is added to a pre-denitration gas and when denitration performance improving gases of various types are added thereto using an Ir-W-based catalyst.
Fig. 6 is a graph showing the relationship between an inlet temperature and a denitration ratio of catalysts when no denitration performance improving gas is added to a pre-denitration gas and when denitration performance improving gases of various types are added thereto using an Ir-based catalyst.
Fig. 7 is a sequence diagram of the denitration device according to the second embodiment of the present invention.
Fig. 8 is a graph showing the relationship between an inlet temperature and a denitration ratio of an Ir-W-based catalyst in an initial state with respect to an exhaust gas containing SO_{X} and the relationship between an inlet temperature and a denitration ratio of an Ir-W-based catalyst after a predetermined time has elapsed for the exhaust gas.
Fig. 9 is a graph showing the relationship between an inlet temperature and a denitration ratio of an Ir-based catalyst in an initial state with respect to an exhaust gas containing SO_{X} and the relationship between an inlet temperature and a denitration ratio of an Ir-based catalyst after a predetermined time has elapsed for the exhaust gas.
Fig. 10 is a system diagram of a denitration device according to a third embodiment of the present invention.
Fig. 11 is a flowchart describing operations of a controller according to the third embodiment of the present invention.
Fig. 12 is a system diagram of a denitration device according to a fourth embodiment of the present invention.
Fig. 13 is a sequence diagram of the denitration device according to the fourth embodiment of the present invention.
Fig. 14 is a system diagram of a denitration device according to a fifth embodiment of the present invention.
Fig. 15 is a diagram showing a configuration of a first modified example of a denitration reactor according to the present invention.
Fig. 16 is a diagram showing a configuration of a second modified example of the denitration reactor according to the present invention.
Fig. 17 is a graph showing the relationship between an inlet temperature and a denitration ratio in a denitration reactor of the first modified example of the present invention and a denitration reactor including no temperature distribution regulator.
Fig. 18 is a system diagram of an exhaust gas treatment facility according to one embodiment of the present invention.

### [Description of Embodiments]

Various embodiments of the present invention will be described below in detail with reference to the drawings.

### "First embodiment of denitration device"

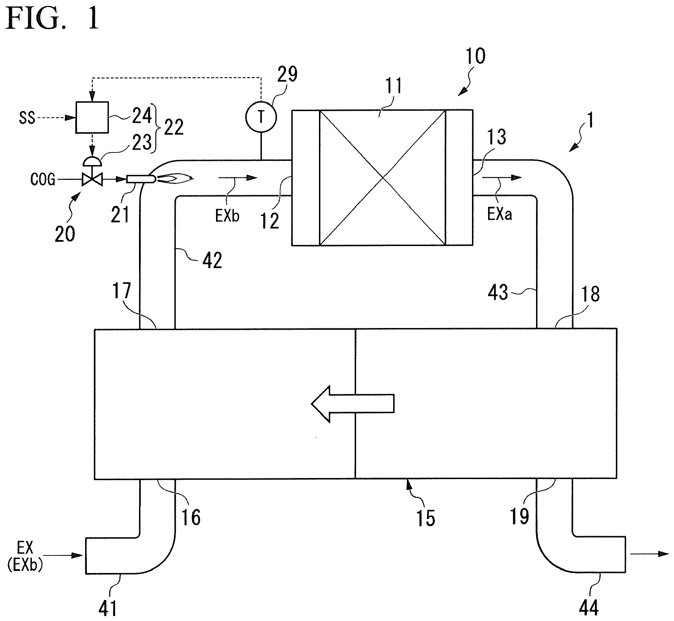

A denitration device according to a first embodiment of the present invention will be described with reference to Fig. 1 to Fig. 3.

Nitrogen oxides (hereinafter referred to as NOx), CO, and the like are contained in an exhaust gas treated in the denitration device of the present embodiment.

As shown in Fig. 1, a denitration device 1 of the present embodiment includes a denitration reactor 10, a heat exchanger 15, a heater 20, and a thermometer 29. The denitration reactor 10 reduces NOx contained in an exhaust gas EX. The heat exchanger 15 exchanges heat between a pre-denitration gas EXb which is an exhaust gas EX that has not flowed into the denitration reactor 10 and a denitrified gas EXa which is an exhaust gas EX flowing out from the denitration reactor 10. The heater 20 heats the exhaust gas EX. The thermometer 29 determines the temperature of the exhaust gas EX.

A catalyst 11 containing Ir which reduces nitrogen oxides contained in the exhaust gas EX is filled into a reactor vessel of the denitration reactor 10. In the reactor vessel of the denitration reactor 10, a pre-denitration gas inlet 12 into which the pre-denitration gas EXb flows and a denitrified gas outlet 13 from which the denitrified gas EXa flows out are formed.

As the catalyst 11 containing Ir which is filled into the denitration reactor 10, for example, an Ir-W-based catalyst containing Ir and W, an Ir-based catalyst containing only Ir without W, and the like may be exemplified. As carriers for such catalysts 11, SiO₂, Al₂O₃, TiO₂, ZrO₂, and SiO₂/Al₂O₃ may be exemplified. The Ir-based catalyst is prepared, for example, by impregnating the above carrier with an iridium chloride aqueous solution. In addition, the Ir-W-based catalyst may be prepared, for example, first, by impregnating the above carrier with an ammonium metatungstate aqueous solution, and then impregnating a carrier on which tungsten is supported with a hexachloroiridic acid solution. All of the above methods of preparing a catalyst are well-known techniques. For example, details are described in "Masaaki Haneda, and two others, NO selective reduction reaction with the coexistence of SO2 with H2 and CO as a reducing agent, Journal of the Japan Petroleum Institute, The Japan Petroleum Institute, 2006, vol. 49, No. 5, p. 220" and the like.

Specific producing procedures of an Ir-based catalyst and an Ir-W-based catalyst will be described below.

Procedures of producing an Ir-based catalyst will be described.

First, SiO₂ powder is prepared as a carrier. Next, the carrier is impregnated in a hexachloroiridic acid solution (H₂IrCl₆). Then, moisture in the aqueous solution is evaporated and then the residual catalyst powder is dried. This catalyst powder is a product in which iridium is supported on a carrier. Next, this catalyst powder, that is, the carrier on which iridium is supported, is calcined. Next, water, a binder, and the like are added to a primary intermediate obtained by the calcination to produce a slurry containing the primary intermediate. Next, the slurry is applied to a surface of a substrate. The substrate is, for example, a sintered honeycomb structure containing SiO₂Al₂O₃ as a main component. Next, the substrate to which the slurry is applied is calcined. Finally, iridium in a secondary intermediate obtained by the calcination is subjected to an activation treatment. In the activation treatment, regarding the secondary intermediate, iridium oxide in the secondary intermediate is hydrogen-reduced under a high temperature environment in a hydrogen-gas-containing atmosphere. Above, as the Ir-based catalyst, for example, 1 wt% Ir/SiO₂ applied at 100 g/m² to the substrate is completed.

Procedures of producing an Ir-W-based catalyst will be described.

First, Ir-based catalyst SiO₂ powder is prepared, and a primary intermediate is formed in the same procedures as the procedures of producing an Ir-based catalyst. Next, the primary intermediate, that is, a carrier on which iridium is supported, is impregnated in an ammonium metatungstate aqueous solution. Then, moisture in the aqueous solution is evaporated and then the residual catalyst powder is dried. This catalyst powder is a product in which iridium and tungsten are supported on a carrier. Next, this catalyst powder, that is, the carrier on which iridium and tungsten are supported is calcined. Next, water, a binder, and the like are added to a secondary intermediate (that is different from the secondary intermediate obtained in the process of producing an Ir-based catalyst) obtained by the calcination to produce a slurry containing the secondary intermediate. Next, the slurry is applied to a surface of a substrate. The substrate is, for example, a sintered honeycomb structure exemplified above. Next, the substrate to which the slurry is applied is calcined. Finally, iridium in a tertiary intermediate obtained by the calcination is subjected to an activation treatment. In the activation treatment, regarding the tertiary intermediate, iridium oxide in the tertiary intermediate is hydrogen-reduced under a high temperature environment in a hydrogen-gas-containing atmosphere. Above, as the Ir-W-based catalyst, for example, 1 wt% Ir/10 wt% WO₃/SiO₂ applied at 100 g/m² to the substrate is completed.

The heat exchanger 15 exchanges heat between the denitrified gas EXa and the pre-denitration gas EXb and cools the denitrified gas EXa and heats the pre-denitration gas EXb. While the denitrified gas EXa and the pre-denitration gas EXb may directly exchange heat in this case, the denitrified gas EXa and the pre-denitration gas EXb may exchange heat with an intermediate medium therebetween. In the heat exchanger 15, a pre-denitration gas inlet 16 into which the pre-denitration gas EXb flows, a pre-denitration gas outlet 17 from which the pre-denitration gas EXb flows out, a denitrified gas inlet 18 into which the denitrified gas EXa flows, and a denitrified gas outlet 19 from which the denitrified gas EXa flows out are formed.

A first pre-denitration gas line 41 is connected to the pre-denitration gas inlet 16 of the heat exchanger 15, and a second pre-denitration gas line 42 is connected to the pre-denitration gas outlet 17 of the heat exchanger 15. For example, a generation source of the exhaust gas EX is connected to the first pre-denitration gas line 41. The pre-denitration gas inlet 12 of the denitration reactor 10 is connected to the second pre-denitration gas line 42. A first denitrified gas line 43 is connected to the denitrified gas outlet 13 of the denitration reactor 10. The denitrified gas inlet 18 of the heat exchanger 15 is connected to the first denitrified gas line 43. A second denitrified gas line 44 is connected to the denitrified gas outlet 19 of the heat exchanger 15. For example, a chimney is connected to the second denitrified gas line 44.

The heater 20 heats the pre-denitration gas EXb that has passed through the heat exchanger 15 and can regulate a heating amount of the pre-denitration gas EXb. Specifically, the heater 20 includes a heating unit 21 configured to heat the pre-denitration gas EXb and a heating amount regulating unit 22 configured to regulate a heating amount produced by the heating unit 21. The heating unit 21 includes a burner (hereinafter referred to as a burner 21) that injects, for example, a coke oven gas (hereinafter referred to as COG) which is a type of combustible fluid. In addition, the heating amount regulating unit 22 includes a COG flow rate regulating valve (combustible fluid regulating valve) 23 configured to regulate a flow rate of COG which is a type of combustible fluid and a controller 24 configured to control a valve opening degree of the COG flow rate regulating valve 23 according to the temperature determined by the thermometer 29.

The burner 21 is provided in the second pre-denitration gas line 42 and injects COG into the line 42. The thermometer 29 is provided along the second pre-denitration gas line 42 and on the side of the denitration reactor 10 relative to the burner 21. The controller 24 controls a valve opening degree of the COG flow rate regulating valve 23 so that the temperature determined by the thermometer 29, that is, the temperature of the pre-denitration gas EXb immediately before it flows into the denitration reactor 10, falls within a target temperature range.

In the denitration reactor 10, the following reactions proceed due to the catalyst 11. Specifically, a reduction reaction in which NO is reduced using CO as a reducing agent as shown in the following Reaction (1) and an oxidation reaction of CO with O₂ as shown in the following Reaction (2) proceed.

NO+CO→1/2N₂±CO₂ ········ (1)

CO+1/2O₂→CO₂ ··········· (2)

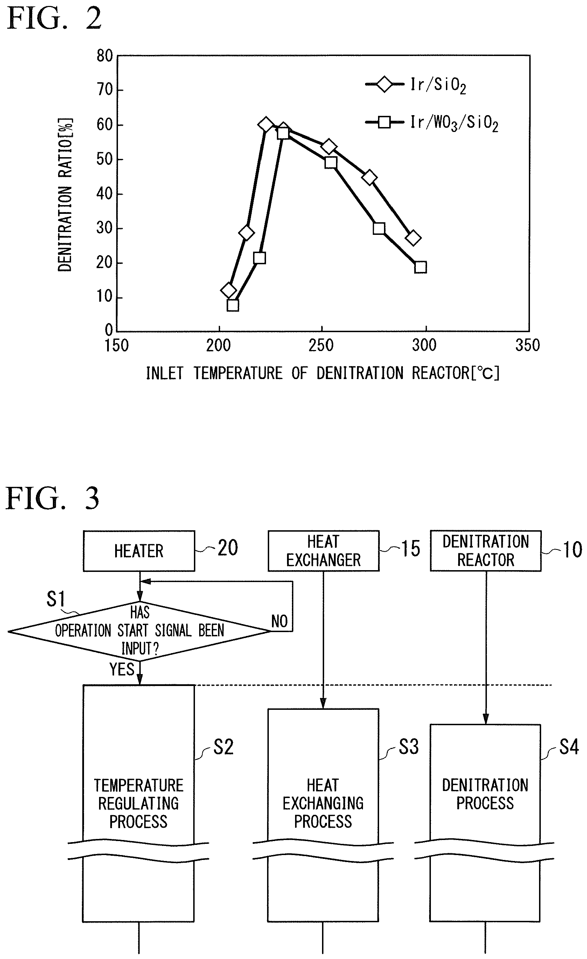

Next, a denitration ratio of the catalyst 11 will be described with reference to Fig. 2. Here, in the graph shown in Fig. 2, the horizontal axis represents the temperature of the exhaust gas EX at the inlet of the denitration reactor 10 and the vertical axis represents the denitration ratio. In addition, the graph shown in Fig. 2 is obtained in the following conditions.
Exhaust gas flow rate: 201.6 [N1/h-wet]
Amount of a processing gas per unit gas contact surface of a catalyst: 9.6 [Nm³/(m²·hr)]
NO: 160 [ppmvd]
CO: 8000 [ppmvd]
H₂: 0 [ppmvd]
SO₂: 30 [ppmvd]
O₂: 14.7 [%vd]
CO₂: 7.9 [%vd]
H₂O: 6.9 [%]
N₂: the residual

As shown in Fig. 2, when the catalyst 11 is the Ir-based catalyst (Ir/SiO₂) (plotted as ◊ in the drawing) or is the Ir-W-based catalyst (Ir/WO₃/SiO₂) (plotted as □ in the drawing), a denitration reaction occurs when the temperature of the exhaust gas EX at the inlet of the denitration reactor 10 is within a range of 200 to 300 °C. In addition, a high denitration ratio (denitration ratio of 20% or more) is obtained when the temperature of the exhaust gas EX at the inlet of the denitration reactor 10 is within a range of 220 to 290 °C. Further, a higher denitration ratio (denitration ratio of 30% or more) is obtained when the temperature of the exhaust gas EX at the inlet of the denitration reactor 10 is within a range of 230 to 280 °C. Basically, although the denitration reaction proceeds when a gas temperature is higher, when a gas temperature is too high, a self oxidation reaction of carbon monoxide which is a reducing agent also proceeds at the same time. Therefore, as described above, the temperature of the exhaust gas EX is preferably in a range of 220 to 290 °C, and more preferably in a range of 230 to 280 °C. In addition, when the Ir-based catalyst is used as the catalyst 11, if the temperature of the exhaust gas EX at the inlet of the denitration reactor 10 is set to 200 °C or more, the denitration ratio can reach 10% or more.

Therefore, in the present embodiment, a valve opening degree of the COG flow rate regulating valve 23 is controlled by the controller 24 so that the temperature determined by the thermometer 29, that is, the temperature of the pre-denitration gas EXb immediately before it flows into the denitration reactor 10, falls within a temperature range of 200 to 300 °C, preferably 220 to 290 °C, and more preferably 230 to 280 °C. In other words, a target temperature range of the pre-denitration gas EXb immediately before it flows into the denitration reactor 10 in the present embodiment is preferably a range of 200 to 300 °C, more preferably a range of 220 to 290 °C, and most preferably a range of 230 to 280 °C.

Next, operations of the denitration device 1 will be described with reference to a sequence diagram of the denitration device 1 shown in Fig. 3.

When an operation start signal SS indicating operation start of the generation source of the exhaust gas EX is input to the controller 24 (S1), the controller 24 opens the COG flow rate regulating valve 23. A timing at which the COG flow rate regulating valve 23 is opened is a timing before the generation source is operated and the exhaust gas EX from the operated generation source actually flows into the denitration reactor 10. When the COG flow rate regulating valve 23 is opened, COG is injected from the burner 21 into the second pre-denitration gas line 42, and this COG is combusted in the second pre-denitration gas line 42. A combustion gas generated when COG is combusted passes through the second pre-denitration gas line 42 and heats a gas flowing into the denitration reactor 10.

The temperature of the catalyst 11 before the operation of the generation source of the exhaust gas EX starts is less than 200 °C and is generally normal temperature. On the other hand, as described above, a valve opening degree of the COG flow rate regulating valve 23 is regulated so that the temperature determined by the thermometer 29, that is, the temperature of the pre-denitration gas EXb immediately before it flows into the denitration reactor 10, falls within a target temperature range (S2: temperature regulating process). Therefore, immediately after the operation of the generation source of the exhaust gas EX starts, a valve opening degree of the COG flow rate regulating valve 23 increases, a flow rate of COG injected from the burner 21 increases, and the temperature determined by the thermometer 29 quickly increases. In other words, immediately after the operation of the generation source of the exhaust gas EX starts, the temperature of the catalyst 11 quickly increases.

Examples of the operation start signal SS indicating operation start of the generation source of the exhaust gas EX include a control signal that is input by an operator to the controller 24 according to the operation of the generation source of the exhaust gas EX, a control signal for operating the generation source of the exhaust gas EX, a flow rate signal indicating a flow rate of the exhaust gas EX at the outlet of the generation source, a concentration signal indicating a NOx concentration of the exhaust gas EX at the outlet of the generation source, and the like. When the flow rate signal indicating a flow rate of the exhaust gas EX at the outlet of the generation source is used as the operation start signal SS, if the flow rate indicated by the flow rate signal is a predetermined value or more, the operation of the generation source is considered to have started. In addition, when the concentration signal indicating a NOx concentration at the outlet of the generation source is used as the operation start signal SS, if the NOx concentration indicated by the concentration signal is a predetermined value or more, the operation of the generation source is considered to have started.

The pre-denitration gas EXb which is the exhaust gas EX from the generation source flows from the pre-denitration gas inlet 16 of the heat exchanger 15 into the heat exchanger 15 through the first pre-denitration gas line 41. In addition, a gas from the denitration reactor 10 flows from the denitrified gas inlet 18 of the heat exchanger 15 into the heat exchanger 15 through the first denitrified gas line 43. In the heat exchanger 15, the pre-denitration gas EXb exchanges heat with the gas from the denitration reactor 10, the pre-denitration gas EXb is heated, and the gas from the denitration reactor 10 is cooled (S3: heat exchanging process). The gas from the denitration reactor 10 cooled in the heat exchanger 15 is discharged to the atmosphere from a chimney and the like through the second denitrified gas line 44. In addition, the pre-denitration gas EXb heated in the heat exchanger 15 flows into the denitration reactor 10 through the second pre-denitration gas line 42.

The pre-denitration gas EXb heated in the heat exchanger 15 is further heated by combustion heat of the COG while it passes through the second pre-denitration gas line 42. Therefore, the pre-denitration gas EXb is heated by the heat exchanger 15 and the heater 20 and then flows into the denitration reactor 10.

If the temperature of the pre-denitration gas EXb flowing into the denitration reactor 10 is within a range of 200 to 300 °C, the reactions shown in the above Reactions (1) and (2) proceed in the denitration reactor 10, and NOx in the exhaust gas EX becomes N₂ (S4: denitration process).

Since the reaction in the denitration reactor 10 is a reaction accompanying generation of heat, the temperature of the denitrified gas EXa flowing out from the denitration reactor 10 becomes higher than the temperature of the pre-denitration gas EXb immediately before it flows into the denitration reactor 10. The denitrified gas EXa flows from the denitrified gas inlet 18 of the heat exchanger 15 into the heat exchanger 15 through the first denitrified gas line 43. As described above, in the heat exchanger 15, the denitrified gas EXa exchanges heat with the pre-denitration gas EXb, the pre-denitration gas EXb is heated, and the denitrified gas EXa is cooled (S3: heat exchanging process). The denitrified gas EXa cooled in the heat exchanger 15 is discharged to the atmosphere from a chimney through the second denitrified gas line 44.

When the reaction in the denitration reactor 10 proceeds, the temperature of the denitrified gas EXa flowing out from the denitration reactor 10 increases as the reaction proceeds. Therefore, in the heat exchanger 15, an amount of heat transferred from the denitrified gas EXa to the pre-denitration gas EXb increases, and the temperature of the pre-denitration gas EXb before being heated by the combustion heat of the COG increases. When the heating amount due to the combustion heat of the COG is substantially the same, if the temperature of the pre-denitration gas EXb before being heated by the combustion heat of the COG increases, the temperature determined by the thermometer 29 also increases.

When the temperature determined by the thermometer 29 gradually increases, the controller 24 gradually decreases the valve opening degree of the COG flow rate regulating valve 23 according to the temperature increase (S2: temperature regulating process). Therefore, when the temperature determined by the thermometer 29 gradually increases, the heating amount of the pre-denitration gas EXb due to the combustion heat of the COG decreases. When the reaction in the denitration reactor 10 continues and the temperature of the pre-denitration gas EXb heated by the heat exchanger 15 is, for example, within a range of 200 to 300 °C, the COG flow rate regulating valve 23 is almost closed. When the temperature of the pre-denitration gas EXb is, for example, about 230 °C, the COG flow rate regulating valve 23 is completely closed. In this case, no COG is injected from the burner 21, and the pre-denitration gas EXb is not heated by combustion heat of COG. That is, in this case, using only heat generated due to the reaction in the denitration reactor 10, the temperature of the pre-denitration gas EXb is maintained, for example, within a range of 200 to 300 °C.

Even if the reaction in the denitration reactor 10 continuously occurs, when there is a fluctuation in flow rate of the exhaust gas EX from the generation source, the COG flow rate regulating valve 23 may be opened. For example, the flow rate of the exhaust gas EX from the generation source may decrease, and the flow rate of the exhaust gas EX from the generation source increases immediately after the amount of heat generation in the denitration reactor 10 decreases. Even if the exhaust gas EX is heated in the heat exchanger 15, the temperature determined by the thermometer 29 may be lower than 200 °C. In this case, the COG flow rate regulating valve 23 is opened, and the exhaust gas EX that has not flowed into the denitration reactor 10 is heated by the combustion heat of the COG (S2: temperature regulating process).

As described above, in the present embodiment, since the catalyst 11 containing Ir is used to reduce NOx without using ammonia, it is possible to reduce running costs. In addition, in the present embodiment, since no ammonia is used, acidic ammonium sulfate from a reaction between ammonia and sulfur oxides is not generated in the denitration reactor 10. Therefore, in the present embodiment, it is possible to avoid clogging and corrosion in a facility due to acidic ammonium sulfate.

In addition, in the present embodiment, when the temperature of the gas flowing into the denitration reactor 10 is low, since the gas is heated by the heater 20, even if flowing of the exhaust gas EX into the denitration device 1 starts, it is possible to reduce a time lag from when flowing starts until reduction of NOx contained in the exhaust gas EX starts. Moreover, in the present embodiment, before flowing of the exhaust gas EX into the denitration reactor 10 starts, since the gas flowing into the denitration reactor 10 is heated by the heater 20, it is possible to reduce NOx contained in the exhaust gas EX immediately after flowing of the exhaust gas EX starts.

In addition, in the present embodiment, according to the temperature determined by the thermometer 29, since a heating amount in the heater 20 is controlled, it is possible to reduce NOx continuously and stably. Further, in the present embodiment, since a heating amount in the heater 20, in other words, a valve opening degree of the COG flow rate regulating valve 23, is controlled according to the temperature determined by the thermometer 29, the flow rate of COG decreases when the temperature of the gas flowing into the denitration reactor 10 increases. Therefore, in the present embodiment, regarding this effect, it is possible to reduce running costs.

### "Second embodiment of denitration device"

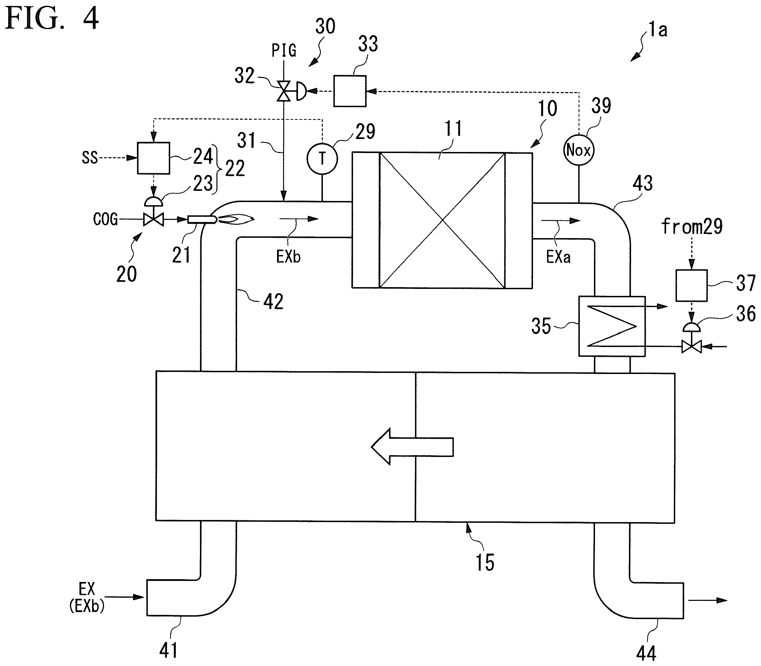

A second embodiment of a denitration device according to the present invention will be described with reference to Fig. 4 to Fig. 7.

As shown in Fig. 4, a denitration device 1a of the present embodiment is obtained by adding a performance improving gas supply device 30, a densitometer 39, and an exhaust heat recovery device 35 to the denitration device 1 of the first embodiment. The performance improving gas supply device 30 supplies a denitration performance improving gas PIG to be described below into the pre-denitration gas EXb. The densitometer 39 determines the concentration of NOx in the denitrified gas EXa.

The exhaust heat recovery device 35 is a heat exchanger that exchanges heat between the denitrified gas EXa of which heat is not exchanged by the heat exchanger 15 and a refrigerant, and cools the denitrified gas EXa, and heats the refrigerant. The exhaust heat recovery device 35 is provided along the first denitrified gas line 43. The denitration device 1a of the present embodiment further includes a heat exchange restrictor configured to restrict heat exchange between the denitrified gas EXa and the refrigerant in the exhaust heat recovery device 35. The heat exchange restrictor includes a refrigerant flow rate regulating valve 36 configured to regulate a flow rate of a refrigerant that passes through a refrigerant line connected to the exhaust heat recovery device 35 and a controller 37 configured to control a valve opening degree of the refrigerant flow rate regulating valve 36 according to the temperature determined by the thermometer 29.

The performance improving gas supply device 30 includes a performance improving gas line 31, a performance improving gas flow rate regulating valve 32, and a controller 33. The performance improving gas line 31 guides the denitration performance improving gas PIG from the generation source of the denitration performance improving gas PIG into the second pre-denitration gas line 42. The performance improving gas flow rate regulating valve 32 regulates a flow rate of the denitration performance improving gas PIG that flows through the performance improving gas line 31. The controller 33 controls the valve opening degree of the performance improving gas flow rate regulating valve 32 according to the NOx concentration determined by the densitometer 39.

The performance improving gas line 31 is connected between a position at which the burner 21 is installed and a position at which the thermometer 29 is installed along the second pre-denitration gas line 42. Here, the performance improving gas line 31 may be connected at another position as long as it is on the side of the generation source of the exhaust gas EX relative to the thermometer 29. The densitometer 39 is provided along the first denitrified gas line 43.

The denitration performance improving gas PIG is a gas containing at least one of hydrogen and carbon monoxide. In the present embodiment, as the denitration performance improving gas PIG, any one of a blast furnace gas (hereinafter referred to as a BFG), a converter gas (hereinafter referred to as a Linz-Donawitz gas (LDG)), and a mixed gas of BFG and LDG is used.

Hydrogen or carbon monoxide serves as a reducing agent for NOx and has an effect of facilitating the denitration reaction in the denitration reactor 10. Moreover, hydrogen or carbon monoxide has an effect of widening the temperature range in which the denitration reaction occurs in the denitration reactor 10.

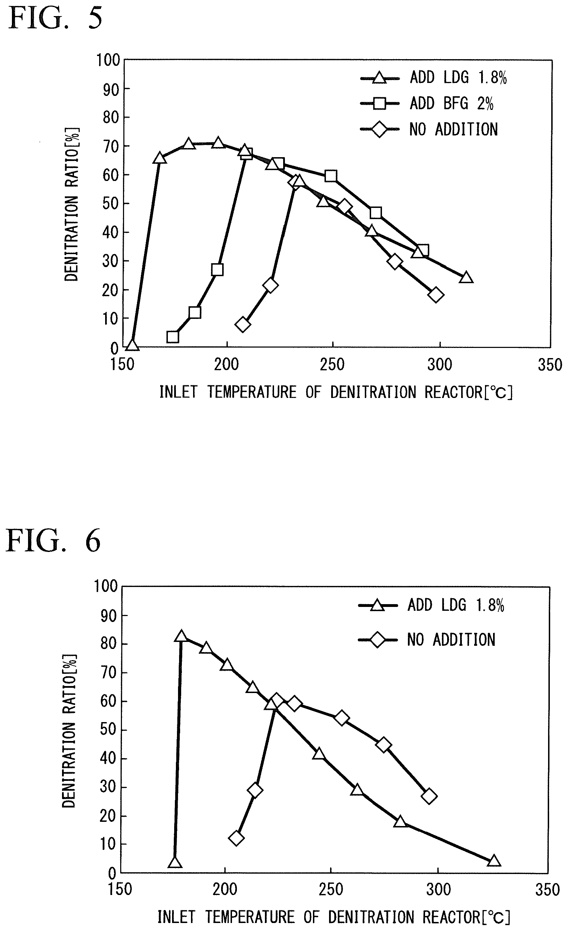

Fig. 5 is a graph showing the relationship between a gas temperature at the inlet of the denitration reactor 10 and the denitration ratio when no denitration performance improving gas PIG is added to the pre-denitration gas EXb and when denitration performance improving gases PIGs of various types are added thereto using the Ir-W-based catalyst (Ir/WO₃/SiO₂) as the catalyst 11. Here, in Fig. 5, gas conditions when no denitration performance improving gas PIG is added to the pre-denitration gas EXb and denitration performance improving gases PIGs of various types are added thereto are as follows.
(1) When no denitration performance improving gas PIG is added to the pre-denitration gas EXb (plotted as ◊ in the drawing)
   Concentration of CO in the pre-denitration gas EXb: 8000 [ppmvd]
   Concentration of H₂ in the pre-denitration gas EXb: 0 [ppmvd]
(2) When 2 vol% of a BFG-equivalent gas as a denitration performance improving gas PIG is added to the pre-denitration gas EXb with respect to 100 vol% of an exhaust gas amount (plotted as □ in the drawing)
   Concentration of CO in the pre-denitration gas EXb after addition: 12000 [ppmvd]
   Concentration of H₂ in the pre-denitration gas EXb after addition: 1000 [ppmvd]
(3) When 1.8 vol% of an LDG-equivalent gas as a denitration performance improving gas PIG is added to the pre-denitration gas EXb with respect to 100 vol% of an exhaust gas amount (plotted as Δ in the drawing)
   Concentration of CO in the pre-denitration gas EXb after addition: 20000 [ppmvd]
   Concentration of H₂ in the pre-denitration gas EXb after addition: 3500 [ppmvd]

As shown in Fig. 5, a lower limit temperature at which the denitration reaction occurs when no denitration performance improving gas PIG is added to the pre-denitration gas EXb is about 200 °C. On the other hand, a lower limit temperature at which the denitration reaction occurs when 2 vol% of BFG is added to the pre-denitration gas EXb is about 160 °C. Therefore, compared to when no denitration performance improving gas PIG is added to the pre-denitration gas EXb, when 2 vol% of BFG is added to the pre-denitration gas EXb, the lower limit temperature at which the denitration reaction occurs can be lowered. Further, compared to when no denitration performance improving gas PIG is added to the pre-denitration gas EXb, when 2 vol% of BFG is added to the pre-denitration gas EXb, it is possible to increase the denitration ratio in each of the temperature ranges. Here, when 2 vol% of BFG is added to the pre-denitration gas EXb, if the temperature of the exhaust gas EX at the inlet of the denitration reactor 10 is set to be within a range of 180 °C to 300 °C (denitration ratio of 10% or more), preferably within a range of 180 to 290 °C, more preferably within a range of 200 to 290 °C (denitration ratio of 30% or more), and still more preferably within a range of 210 to 240 °C (denitration ratio of 60% or more), it is possible to increase the denitration ratio. While an example in which 2 vol% of BFG is added to the pre-denitration gas EXb has been described here, even if an addition ratio of BFG changes, the relationship between the temperature range of the exhaust gas EX and the denitration ratio is basically the same. However, when the addition ratio of BFG changes, the denitration ratio is different from that in the above example.

In addition, the lower limit temperature at which the denitration reaction occurs when 1.8 vol% of LDG is added to the pre-denitration gas EXb is about 150 °C. Therefore, compared to when no denitration performance improving gas PIG is added to the pre-denitration gas EXb, even if 1.8 vol% of LDG is added to the pre-denitration gas EXb, the lower limit temperature at which the denitration reaction occurs can be lowered. Further, compared to when no denitration performance improving gas PIG is added to the pre-denitration gas EXb, when 1.8 vol% of LDG is added to the pre-denitration gas EXb, it is possible to increase the denitration ratio in most of the temperature range. Here, when 1.8 vol% of LDG is added to the pre-denitration gas EXb, if the temperature of the exhaust gas EX at the inlet of the denitration reactor 10 is set to be within a range of 160 °C to 320 °C (denitration ratio of 10% or more), preferably within a range of 170 to 300 °C, more preferably within a range of 170 to 290 °C (denitration ratio of 30% or more), and still more preferably within a range of 170 to 210 °C (denitration ratio of 60% or more), it is possible to increase the denitration ratio. While an example in which 1.8 vol% of LDG is added to the pre-denitration gas EXb has been described here, even if the addition ratio of LDG changes, the relationship between the temperature range of the exhaust gas EX and the denitration ratio is basically the same. However, when the addition ratio of LDG changes, the denitration ratio is different from that in the above example.

Fig. 6 is a graph showing the relationship between the gas temperature at the inlet of the denitration reactor 10 and the denitration ratio when no denitration performance improving gas PIG is added to the pre-denitration gas EXb and when denitration performance improving gases PIGs of various types are added using the Ir-based catalyst (Ir/SiO₂) as the catalyst 11. Here, in Fig. 6, gas conditions when no denitration performance improving gas PIG is added to the pre-denitration gas EXb and when denitration performance improving gases PIGs of various types are added are as follows.
(1) When no denitration performance improving gas PIG is added to the pre-denitration gas EXb (plotted as ◊ in the drawing)
   Concentration of CO in the pre-denitration gas EXb: 8000 [ppmvd]
   Concentration of H₂ in the pre-denitration gas EXb: 0 [ppmvd]
(2) When 1.8 vol% of an LDG-equivalent gas as a denitration performance improving gas PIG is added to the pre-denitration gas EXb with respect to 100 vol% of an exhaust gas amount (plotted as Δ in the drawing)
   Concentration of CO in the pre-denitration gas EXb after addition: 20000 [ppmvd]
   Concentration of H₂ in the pre-denitration gas EXb after addition: 3500 [ppmvd]

As shown in Fig. 6, the lower limit temperature at which the denitration reaction occurs when no denitration performance improving gas PIG is added to the pre-denitration gas EXb is about 200 °C. On the other hand, the lower limit temperature at which the denitration reaction occurs when 1.8 vol% of LDG is added to the pre-denitration gas EXb is about 160 °C. Therefore, compared to when no denitration performance improving gas PIG is added to the pre-denitration gas EXb, when 1.8 vol% of LDG is added to the pre-denitration gas EXb, the lower limit temperature at which the denitration reaction occurs can be lowered. Here, when 1.8 vol% of LDG is added to the pre-denitration gas EXb, if the temperature of the exhaust gas EX at the inlet of the denitration reactor 10 is set to be within a range of 160 °C to 300 °C, preferably within a range of 180 to 300 °C (denitration ratio of 10% or more), more preferably within a range of 200 to 250 °C (denitration ratio of 30% or more), and still more preferably within a range of 200 to 220 °C (denitration ratio of 60% or more), it is possible to increase the denitration ratio. When an example in which 1.8 vol% of LDG is added to the pre-denitration gas EXb has been described here, as described above, even if the addition ratio of LDG changes, the relationship between the temperature range of the exhaust gas EX and the denitration ratio is basically the same. However, when the addition ratio of LDG changes, the denitration ratio is different from that in the above example.

As described above, when the denitration performance improving gas PIG containing hydrogen or carbon monoxide is added to the pre-denitration gas EXb, it is possible to widen the temperature range in which the denitration reaction occurs in the denitration reactor 10 and it is possible to facilitate the denitration reaction in the denitration reactor 10.

Also, here, as the denitration performance improving gas PIG, any one of BFG, LDG, and a mixed gas of BFG and LDG is used. However, when the denitration performance improving gas PIG contains either hydrogen or carbon monoxide, it is possible to obtain the same effect as in the above description. When NOx in the exhaust gas EX is reduced using the Ir-based catalyst or the Ir-W-based catalyst, if hydrogen or carbon monoxide is added to the pre-denitration gas EXb, denitration performance is improved through these catalysts 11. Details thereof are described in, for example, "Masaaki Haneda, and two others, NO selective reduction reaction with the coexistence of SO2 with H2 and CO as a reducing agent, Journal of the Japan Petroleum Institute, The Japan Petroleum Institute, 2006, vol. 49, No. 5, p. 221 to 222."

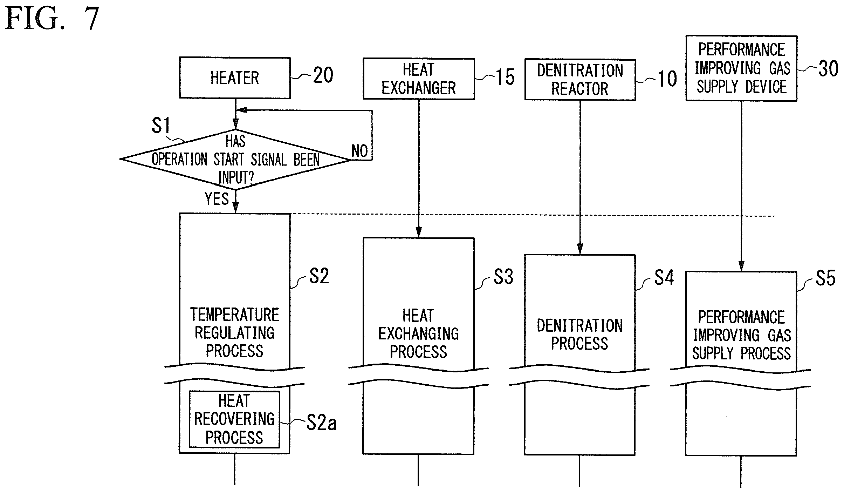

Next, operations of the denitration device 1a will be described with reference to a sequence diagram of the denitration device 1a shown in Fig. 7.

In the denitration device 1a of the present embodiment, as in the denitration device 1 of the first embodiment, when an operation start signal SS is input to the controller 24 of the COG flow rate regulating valve 23 (S1), the COG flow rate regulating valve 23 is opened and a temperature regulating process (S2) starts. Further, in the denitration device 1a of the present embodiment, as in the denitration device 1 of the first embodiment, the heat exchanger 15 performs the heat exchanging process (S3), and the denitration reactor 10 performs the denitration process (S4).

In addition, in the denitration device 1a of the present embodiment, in the relationship in which the performance improving gas supply device 30 is added to the denitration device 1 of the first embodiment, the performance improving gas supply device 30 performs a performance improving gas supply process (S5).

In the performance improving gas supply process (S5), the controller 33 of the performance improving gas supply device 30 controls a valve opening degree of the performance improving gas flow rate regulating valve 32 according to the concentration of NOx determined by the densitometer 39. Specifically, for example, when the concentration of NOx determined by the densitometer 39 is a predetermined value or more, the controller 33 opens the performance improving gas flow rate regulating valve 32. In this case, for example, according to a deviation between the concentration of NOx determined by the densitometer 39 and the predetermined value, a valve opening degree of the performance improving gas flow rate regulating valve 32 is set. When the deviation between the concentration of NOx determined by the densitometer 39 and the predetermined value is large, a valve opening degree of the performance improving gas flow rate regulating valve 32 increases. When the deviation between the concentration of NOx determined by the densitometer 39 and the predetermined value is small, the valve opening degree of the performance improving gas flow rate regulating valve 32 decreases.

When the performance improving gas flow rate regulating valve 32 is opened, the denitration performance improving gas PIG is supplied into the second pre-denitration gas line 42 from the generation source of the denitration performance improving gas PIG, and the denitration performance improving gas PIG is added to the pre-denitration gas EXb that passes through the second pre-denitration gas line 42. When the denitration performance improving gas PIG is added to the pre-denitration gas EXb, as described above, it is possible to widen the temperature range in which the denitration reaction occurs in the denitration reactor 10 and it is possible to facilitate the denitration reaction in the denitration reactor 10. Therefore, for example, when the temperature of the gas flowing into the denitration reactor 10 is not within 200 to 300 °C that is exemplified as an appropriate temperature range in the first embodiment, but is less than 200 °C, it is possible to reduce NOx.

Thus, in the present embodiment, in the temperature regulating process (S2), a valve opening degree of the COG flow rate regulating valve 23 is regulated so that the temperature determined by the thermometer 29, that is, the temperature of the pre-denitration gas EXb immediately before it flows into the denitration reactor 10, falls within a temperature range of 170 to 300 °C, and preferably within a temperature range of 180 to 290 °C.

In addition, in the present embodiment, when the denitration performance improving gas PIG is added to the pre-denitration gas EXb, the amount of heat generation in the system increases. Therefore, the temperature of the pre-denitration gas EXb immediately before it flows into the denitration reactor 10 may be higher than a predetermined temperature (for example, 290 °C). In this case, as one procedure in the temperature regulating process (S2), a heat recovering process (S2a) is performed. In the heat recovering process (S2a), when the temperature determined by the thermometer 29 is higher than a predetermined temperature (for example, 290 °C), the controller 37 opens the refrigerant flow rate regulating valve 36 and sets a valve opening degree of the refrigerant flow rate regulating valve 36 to a valve opening degree corresponding to the predetermined temperature. As a result, the refrigerant flows into the exhaust heat recovery device 35, and the denitrified gas EXa exchanges heat with the refrigerant, and the denitrified gas EXa is cooled, and the refrigerant is heated. Heat of the heated refrigerant is used outside the system as necessary.

As described above, in the present embodiment, although this has already been described, it is possible to widen the temperature range in which the denitration reaction occurs in the denitration reactor 10, and it is possible to facilitate the denitration reaction in the denitration reactor 10. Further, in the present embodiment, since hydrogen or carbon monoxide contained in the denitration performance improving gas PIG is heated while oxidized in the denitration reactor 10, during supply of the denitration performance improving gas PIG, an amount of heat generation in the denitration reactor 10 can be higher than that in the first embodiment. Therefore, in the present embodiment, a heating amount by which the pre-denitration gas EXb is heated in the heat exchanger 15 increases, and a heating amount in the heater 20 is reduced, in other words, the flow rate of COG can be reduced. In addition, in the present embodiment, since the exhaust heat recovery device 35 is provided, it is possible to recover extra heat in the denitration reaction.

Both of the heaters 20 of the denitration devices 1 and 1a in the first and second embodiments described above inject COG and heat a gas using combustion heat of COG. However, the heater may inject a combustible fluid other than COG and heat a gas using combustion heat of the combustible fluid. In addition, without using a combustible fluid, a gas may be heated using heat generation in an electric heater.

### "Embodiments of catalyst for exhaust gas EX containing sulfur oxide"

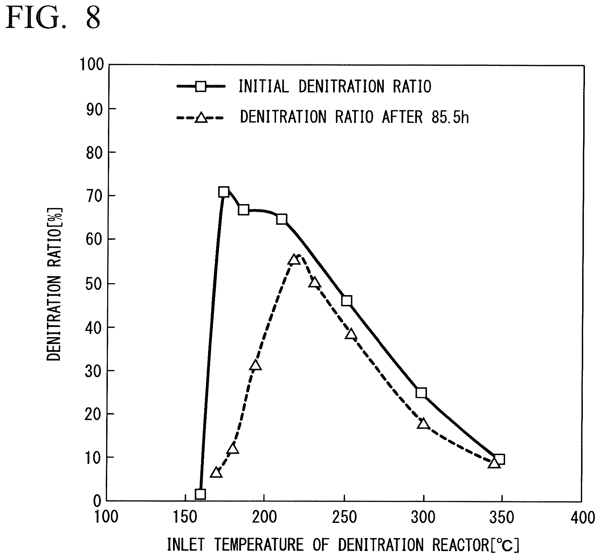

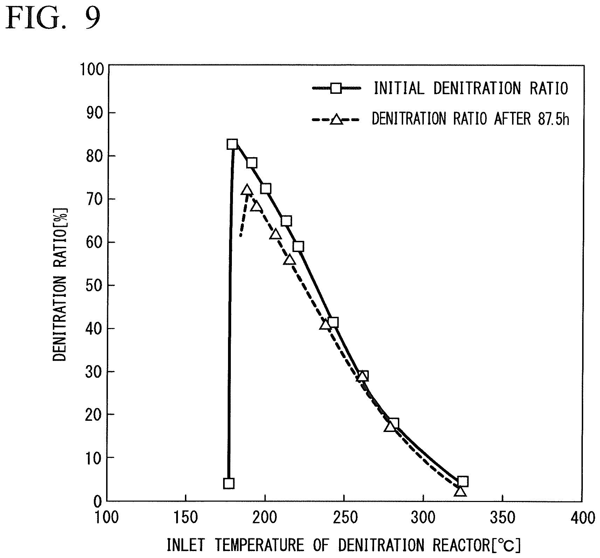

Embodiments of a catalyst for the exhaust gas EX containing sulfur oxides (hereinafter referred to as SO_{X}) will be described with reference to Fig. 8 and Fig. 9.

Fig. 8 and Fig. 9 are both graphs showing the relationship between the gas temperature at the inlet of the denitration reactor 10 and the denitration ratio in the catalyst 11 in an initial state with respect to an exhaust gas EX containing SO_{X} and the relationship between the gas temperature at the inlet of the denitration reactor 10 and the denitration ratio in the catalyst 11 after a predetermined time has elapsed for the exhaust gas EX containing SO_{X}. In addition, the graphs shown in Fig. 8 and Fig. 9 are obtained in the following conditions.
Exhaust gas EX flow rate: 187.7 [N1/h-dry]
Amount of a processing gas per unit gas contact surface of a catalyst: 9.6 [Nm³/(m²·hr)]
NO: 160 [ppm-dry]
CO: 20000 [ppm-dry]
H₂: 3500 [ppm-dry]
SO₂: 27 [ppm-dry]
O₂: 14.7 [%-dry]
CO₂: 7.9 [%-dry]
H₂O: 6.9 [%-wet]
N₂: the residual

As shown in Fig. 8, when the Ir-W-based catalyst (Ir/WO₃/SiO₂) is used as the catalyst 11, compared to the denitration ratio (plotted as □ in the drawing) with the catalyst in an initial state, the denitration ratio (plotted as Δ in the drawing) with the catalyst through which the exhaust gas EX has passed for 85.5 hours is greatly reduced in each temperature range. In addition, the gas temperature at the inlet of the denitration reactor 10 at which the maximum denitration ratio is reached is higher in the catalyst through which the exhaust gas EX has passed for 85.5 hours than the catalyst in an initial state.

On the other hand, as shown in Fig. 9, when the Ir-based catalyst (Ir/SiO₂) is used as the catalyst 11, compared to the denitration ratio (plotted as □ in the drawing) with the catalyst in an initial state, the denitration ratio (plotted as Δ in the drawing) after the exhaust gas EX has passed through the catalyst for 85.5 hours is reduced in each temperature range, but amounts of reduction thereof are very small. Here, with this catalyst, the gas temperature at the inlet of the denitration reactor 10 at which the maximum denitration ratio is reached is higher in the catalyst through which the exhaust gas EX has passed for 85.5 hours than in the catalyst in an initial state.

Therefore, when the exhaust gas EX containing SO_{X} is denitrified, an Ir-based catalyst with less deterioration due to SO_{X} is preferably used.

### "Third embodiment of denitration device"

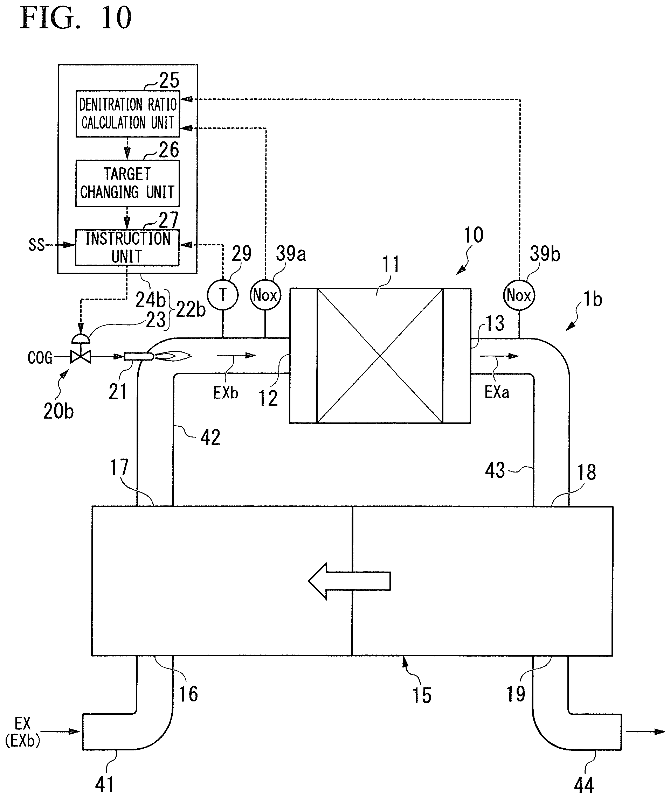

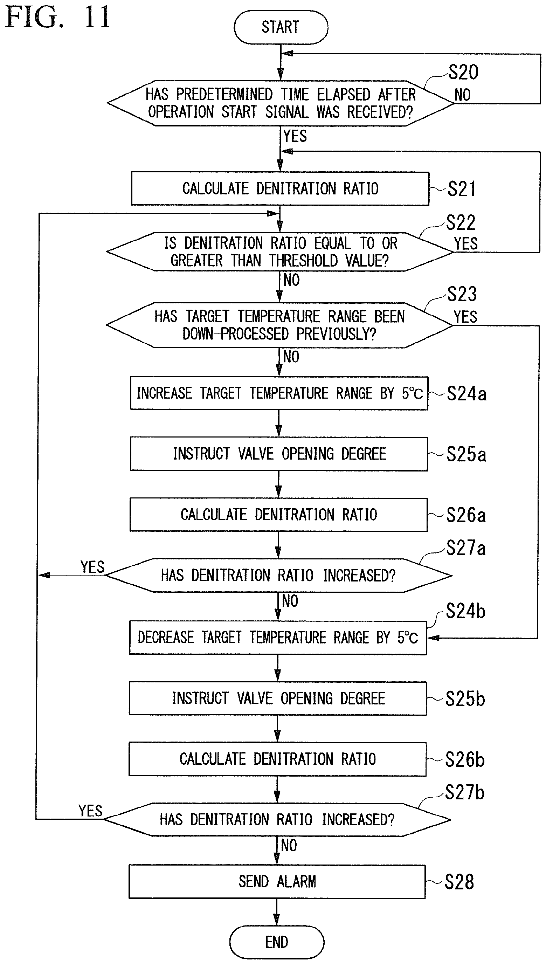

A denitration device according to a third embodiment of the present invention will be described with reference to Fig. 10 and Fig. 11.

As described above, in the catalyst 11, the denitration ratio decreases with the elapse of time and the gas temperature at the inlet of the denitration reactor 10 at which the maximum denitration ratio is reached increases. In the present embodiment, even if the catalyst 11 deteriorates with the elapse of time as described above, a decrease in the denitration ratio in the denitration reactor 10 is minimized.

A denitration device 1b of the present embodiment includes components of the denitration device 1 of the first embodiment, and a first densitometer 39a and a second densitometer 39b which determine the concentration of NOx in an exhaust gas. A controller 24b of a heater 20b of the present embodiment is different from the controller 24 of the heater 20 of the first embodiment in that the first densitometer 39a and the second densitometer 39b are added.

The first densitometer 39a determines the concentration of NOx in the pre-denitration gas EXb. Therefore, the first densitometer 39a is provided along the second pre-denitration gas line 42. In addition, the second densitometer 39b determines the concentration of NOx in the denitrified gas EXa. Therefore, the second densitometer 39b is provided along the first denitrified gas line 43.

The controller 24b of the heater 20b includes a denitration ratio calculation unit 25, a target changing unit 26, and an instruction unit 27. The denitration ratio calculation unit 25 calculates a denitration ratio in the denitration reactor 10 from the concentration of NOx in the pre-denitration gas EXb determined by the first densitometer 39a and the concentration of NOx in the denitrified gas EXa determined by the second densitometer 39b. The target changing unit 26 changes a target temperature range so that the denitration ratio calculated by the denitration ratio calculation unit 25 is equal to or greater than a predetermined value. The predetermined value of the denitration ratio is, for example, 50%. In addition, the target temperature range is a target temperature range of the gas temperature immediately before it flows into the denitration reactor 10, in other words, a target temperature range of the gas temperature at the inlet of the denitration reactor 10. The instruction unit 27 instructs the heating unit regarding a heating amount of the pre-denitration gas EXb by the heating unit so that the temperature determined by the thermometer 29 falls within a target temperature range. Specifically, the instruction unit 27 determines a valve opening degree of the COG flow rate regulating valve 23 at which the temperature determined by the thermometer 29 can fall within a target temperature range, and instructs the COG flow rate regulating valve 23 regarding the valve opening degree.

Note that the target temperature range here is a range in which the denitration ratio is 50% or more, for example, 230 to 250 °C. Since the target temperature range is a temperature range in which the denitration ratio is determined to be 50% or more, the temperature range is narrower than the target temperature range in which denitration is possible as in the first embodiment and the second embodiment. However, in the first embodiment and the second embodiment, the target temperature range may be narrow as in the present embodiment.

Operations of the controller 24b will be described.

In the present embodiment, as in the above embodiments, when the operation start signal SS indicating operation start of the generation source of the exhaust gas EX is input to the controller 24b, the instruction unit 27 of the controller 24b instructs the COG flow rate regulating valve 23 regarding a valve opening degree indicating opening. Then, the instruction unit 27 determines a valve opening degree at which the temperature determined by the thermometer 29 falls within a target temperature range, and instructs the COG flow rate regulating valve 23 regarding the valve opening degree.

When a predetermined time has elapsed after the operation start signal SS is input, the controller 24b starts processes including a process of changing a target temperature range. Here, the predetermined time is a time from when the operation start signal SS is input until the temperature of the entire catalyst 11 in the denitration reactor 10 is assumed to be stabilized. This time differs depending on the size of the denitration reactor 10, a line length of each line, and the like, and for example, may be 1 hour.

Processes of the controller 24b including a process of changing a target temperature range will be described with reference to a flowchart shown in Fig. 11.

The denitration ratio calculation unit 25 of the controller 24b determines whether a predetermined time has elapsed after the instruction unit 27 of the controller 24b receives an operation start signal SS (S20). When it is determined that a predetermined time has elapsed after the instruction unit 27 receives an operation start signal SS, the denitration ratio calculation unit 25 calculates a denitration ratio in the denitration reactor 10 from the concentration of NOx in the pre-denitration gas EXb determined by the first densitometer 39a and the concentration of NOx in the denitrified gas EXa determined by the second densitometer 39b (S21). Note that the denitration ratio calculated here is not limited to the denitration ratio itself, but may be a parameter having a correlation with the denitration ratio. For example, as the parameter, a conversion rate from NOx to N₂ may be used.

When the denitration ratio is calculated by the denitration ratio calculation unit 25, the target changing unit 26 of the controller 24b determines whether the denitration ratio is equal to or greater than a threshold value (S22). The threshold value of the denitration ratio is, for example, 50%. When the denitration ratio is equal to or greater than a threshold value, the process returns to S21. On the other hand, when the denitration ratio is not equal to or greater than a threshold value, that is, when the denitration ratio is less than a threshold value, the target changing unit 26 determines whether down processing for decreasing a target temperature range has been performed previously (S23). When the down processing has not performed previously, up processing for increasing a target temperature range is performed (S24a). In the up processing, for example, the target temperature range is raised by 5 °C. Here, when it is described that the target temperature range is raised by 5 °C, this means that, when the target temperature range is, for example, 230 to 250 °C, the target temperature range is raised to 235 to 255 °C. That is, in the up processing, the target temperature range is shifted up by a predetermined temperature.

The instruction unit 27 determines a valve opening degree of the COG flow rate regulating valve 23 at which the temperature determined by the thermometer 29 falls within the changed target temperature range, and instructs the COG flow rate regulating valve 23 regarding the valve opening degree (S25a).

The denitration ratio calculation unit 25 calculates a denitration ratio in the denitration reactor 10 from the concentration of NOx in the pre-denitration gas EXb determined by the first densitometer 39a and the concentration of NOx in the denitrified gas EXa determined by the second densitometer 39b when a predetermined time has elapsed after the instruction unit 27 instructs the COG flow rate regulating valve 23 regarding the valve opening degree (S26a).

When the denitration ratio is calculated by the denitration ratio calculation unit 25, the target changing unit 26 determines whether this denitration ratio is higher than a denitration ratio obtained previously (S27a). When it is determined that this denitration ratio is higher than a denitration ratio obtained previously, the process returns to S22, and the target changing unit 26 determines whether this denitration ratio is equal to or greater than a threshold value (S22). When this denitration ratio is equal to or greater than a threshold value, the process returns to S21. On the other hand, when the denitration ratio is not equal to or greater than a threshold value, that is, when the denitration ratio is less than a threshold value, the processes of S23, S24a to S27a, and S22 described above are repeated until the denitration ratio is equal to or greater than a threshold value. That is, when the denitration ratio is less than a threshold value, the up processing of the target temperature range is repeated until the denitration ratio is equal to or greater than a threshold value.

On the other hand, in the process of S27a, when it is determined that the denitration ratio calculated by the denitration ratio calculation unit 25 is not higher than a denitration ratio obtained previously, the target changing unit 26 performs the down processing for decreasing a target temperature range (S24b). In the down processing, for example, the target temperature range is lowered by 5 °C. Here, when it is described that the target temperature range is lowered by 5 °C, this means that, when the target temperature range is, for example, 260 to 280 °C, the target temperature range is lowered to 255 to 275 °C. That is, in the down processing, the target temperature range is shifted down by a predetermined temperature.

The instruction unit 27 determines a valve opening degree of the COG flow rate regulating valve 23 at which the temperature determined by the thermometer 29 falls within the changed target temperature range, and instructs the COG flow rate regulating valve 23 regarding the valve opening degree (S25b).

When a predetermined time has elapsed after the instruction unit 27 instructs the COG flow rate regulating valve 23 regarding the valve opening degree, the denitration ratio calculation unit 25 calculates a denitration ratio in the denitration reactor 10 from the concentration of NOx in the pre-denitration gas EXb determined by the first densitometer 39a and the concentration of NOx in the denitrified gas EXa determined by the second densitometer 39b (S26b).

When the denitration ratio is calculated by the denitration ratio calculation unit 25, the target changing unit 26 determines whether this denitration ratio is higher than a denitration ratio obtained previously (S27b). When it is determined that this denitration ratio is higher than a denitration ratio obtained previously, the process returns to S22, and the target changing unit 26 determines whether this denitration ratio is equal to or greater than a threshold value (S22). When this denitration ratio is equal to or greater than a threshold value, the process returns to S21. On the other hand, when the denitration ratio is not equal to or greater than a threshold value, that is, when the denitration ratio is less than a threshold value, as described above, the target changing unit 26 determines whether the down processing for decreasing a target temperature range has been performed previously (S23). In this case, since the down processing of a target temperature range has been performed previously, the target changing unit 26 performs the down processing of a target temperature range (S24b). Then, the processes of S25b, S26b, S27b, S22, S23, and S24b described above are repeated until the denitration ratio is equal to or greater than a threshold value. That is, when the denitration ratio does not increase even if the up processing of a target temperature range is performed, the down processing of a target temperature range is repeated until the denitration ratio is equal to or greater than a threshold value.

On the other hand, in the process of S27b, when it is determined that the denitration ratio calculated by the denitration ratio calculation unit 25 is not higher than a denitration ratio obtained previously, the target changing unit 26 sends an alarm (S28). In this case, since the denitration ratio does not increase even if the target temperature range is up-processed or down-processed, the target changing unit 26 determines that the lifespan of the catalyst 11 has expired, either of the densitometers 39a and 39b has failed, or the gas composition in the exhaust gas EX in the generation source of the exhaust gas EX has greatly changed, and sends an alarm. In addition, when the denitration ratio is less than a threshold value, although the denitration ratio is not equal to or greater than a threshold value while the processes of S22, S23, and S24a to S27a are repeated, in the process of S27a, it may be determined that the denitration ratio does not increase. In this case, since the denitration ratio is not equal to or greater than a threshold value even if the target temperature range is up-processed or down-processed, finally, the target changing unit 26 determines that the lifespan of the catalyst 11 has expired or either of the densitometers 39a and 39b has failed, and sends an alarm.

In the present embodiment, when the gas temperature at the inlet of the denitration reactor 10 at which the maximum denitration ratio is reached that increases with the elapse of time is focused on and the denitration ratio decreases and becomes less than a threshold value, the target temperature range related to the gas temperature at the inlet of the denitration reactor 10 changes. Thus, in the present embodiment, even if the catalyst 11 deteriorates with the elapse of time, the denitration ratio in the denitration reactor 10 can remain at the threshold value or greater.

As described in the second embodiment, when the hydrogen concentration or the carbon monoxide concentration in the exhaust gas EX changes, the temperature range in which the denitration reaction occurs in the denitration reactor 10 changes. In the present embodiment, even if the hydrogen concentration or the carbon monoxide concentration in the exhaust gas EX in the generation source of the exhaust gas EX changes, the target temperature range changes according to the change in the denitration ratio in the denitration reactor 10. Thus, in the present embodiment, even if the hydrogen concentration or the carbon monoxide concentration in the exhaust gas EX in the generation source of the exhaust gas EX changes somewhat, that is, when the gas composition in the exhaust gas EX changes somewhat, the denitration ratio in the denitration reactor 10 can remain at the threshold value or greater.

In the present embodiment, when the denitration ratio is less than a threshold value, the target temperature range changes, and when the denitration ratio is equal to or greater than a threshold value, the target temperature range in which the denitration ratio is equal to or greater than a threshold value is a temporarily determined target temperature range, and an operation is performed until the denitration ratio is less than a threshold value in the target temperature range. However, when the denitration ratio is less than a threshold value, the target temperature range is up-processed, and as a result, the denitration ratio increases, the up processing may be repeated until the denitration ratio decreases, and an operation may be performed in the target temperature range immediately before the denitration ratio decreases. In this case, further, when the denitration ratio is less than a threshold value, the target temperature range is down-processed, and as a result, the denitration ratio increases, the down processing is repeated until the denitration ratio decreases, and an operation is performed in the target temperature range immediately before the denitration ratio decreases. That is, in this example, a temperature range including the temperature at which the denitration ratio is highest is searched for and this temperature range is set as the target temperature range. Here, in this example, when the denitration ratio is less than a threshold value, searching for a temperature range including the temperature at which the denitration ratio is highest starts, regardless of whether the denitration ratio is less than a threshold value, and a temperature range including the temperature at which the denitration ratio is highest may be searched for in each certain period. Further, a temperature range in which the denitration ratio simply increases for each certain period is searched for, and this temperature range may be set as the target temperature range.

In addition, the present embodiment is a modified example of the first embodiment. However, in the second embodiment and the following third embodiment, the target temperature range may change based on the denitration ratio as in the present embodiment.

### "Fourth embodiment of denitration device"

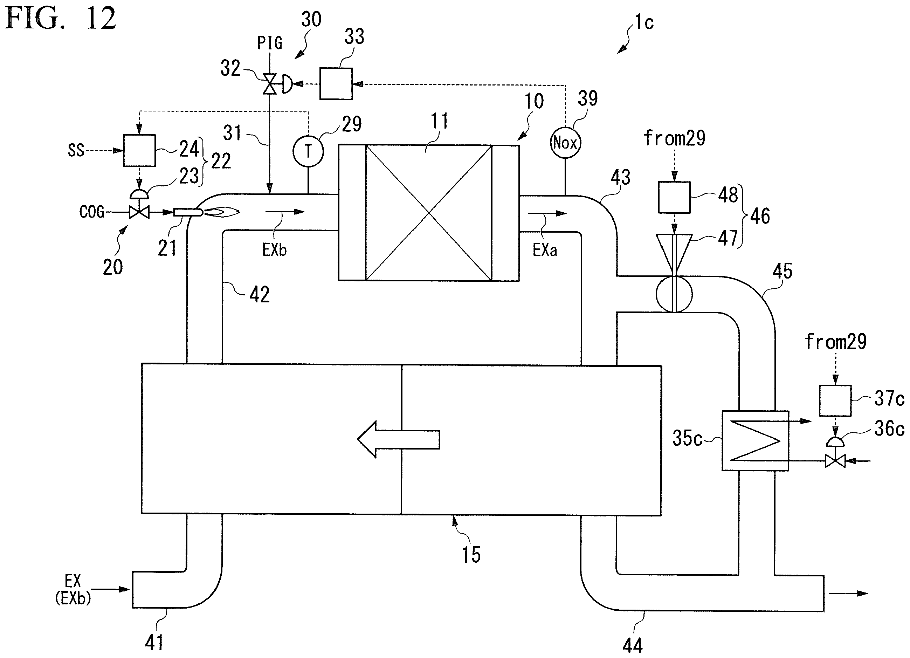

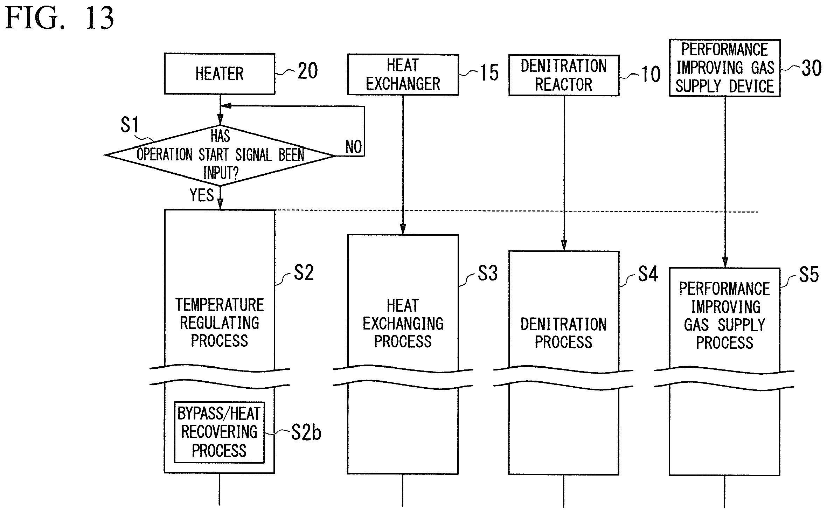

A denitration device according to a fourth embodiment of the present invention will be described with reference to Fig. 12 and Fig. 13.

As shown in Fig. 12, a denitration device 1c of the present embodiment is a modified example of the denitration device 1a of the second embodiment. The denitration device 1c of the present embodiment is obtained by adding a bypass line 45, a bypass flow rate regulating unit 46, and a bypass exhaust heat recovery device 35c to the denitration device 1a of the second embodiment, but omitting the exhaust heat recovery device 35 in the second embodiment.

The bypass line 45 connects the first denitrified gas line 43 to the second denitrified gas line 44 and through it the denitrified gas EXa bypasses the heat exchanger 15.

The bypass flow rate regulating unit 46 includes a bypass valve 47 and a bypass controller 48. The bypass valve 47 is provided along the bypass line 45 and regulates a flow rate of the denitrified gas EXa that flows through the bypass line 45. The bypass controller 48 controls a valve opening degree of the bypass valve 47 according to the temperature determined by the thermometer 29.

The bypass exhaust heat recovery device 35c is provided along the bypass line 45. The bypass exhaust heat recovery device 35c is a heat exchanger that exchanges heat between the denitrified gas EXa that flow through the bypass line 45 and a refrigerant, and cools the denitrified gas EXa, and heats the refrigerant. The denitration device 1c of the present embodiment further includes a heat exchange restrictor configured to restrict heat exchange between the denitrified gas EXa and the refrigerant in the bypass exhaust heat recovery device 35c. The heat exchange restrictor includes a refrigerant flow rate regulating valve 36c configured to regulate a flow rate of a refrigerant that passes through a refrigerant line connected to the bypass exhaust heat recovery device 35c and a controller 37c configured to control a valve opening degree of the refrigerant flow rate regulating valve 36c according to the temperature determined by the thermometer 29.

Next, operations of the denitration device 1c will be described with reference to a sequence diagram of the denitration device 1c shown in Fig. 13.

In the denitration device 1c of the present embodiment, as in the denitration device 1a of the second embodiment, when an operation start signal SS is input to the controller 24 of the COG flow rate regulating valve 23 (S1), the COG flow rate regulating valve 23 is opened, and the temperature regulating process (S2) starts. Further, in the denitration device 1c of the present embodiment, as in the denitration device 1a of the second embodiment, the heat exchanger 15 performs the heat exchanging process (S3), the denitration reactor 10 performs the denitration process (S4), and the performance improving gas supply device 30 performs the performance improving gas supply process (S5).

In the present embodiment, as one procedure in the temperature regulating process (S2), a bypass/heat recovering process (S2b) is performed instead of the heat recovering process (S2a) in the second embodiment. In the bypass/heat recovering process (S2b), when the temperature determined by the thermometer 29 is higher than a predetermined temperature (for example, 290 °C), the bypass controller 48 opens the bypass valve 47, and the valve opening degree of the bypass valve 47 is set as a valve opening degree corresponding to the temperature determined by the thermometer 29. Further, the controller 37c opens the refrigerant flow rate regulating valve 36, and the valve opening degree of the refrigerant flow rate regulating valve 36 is set as a valve opening degree corresponding to the temperature determined by the thermometer 29. As a result, a part of the denitrified gas EXa from the denitration reactor 10 flows into the second denitrified gas line 44 through the bypass line 45. In addition, the refrigerant flows into the bypass exhaust heat recovery device 35c, the denitrified gas EXa and the refrigerant that flow through the bypass line 45 exchange heat, and the denitrified gas EXa is cooled, and the refrigerant is heated. Heat of the heated refrigerant is used outside the system as necessary.

As described above, in the present embodiment, it is possible to discharge extra heat in the denitration reaction outside the system and recover the discharged heat. In addition, in the present embodiment, after the denitration device is completed, when generation of extra heat in the denitration reaction is noticed, or when the gas composition of the pre-denitration gas EXb changes and extra heat is generated in the denitration reaction, compared to the second embodiment, it is possible to reduce an amount of repairing work of the first denitrified gas line 43 for recovering extra heat in the denitration reaction.

Here, in the present embodiment, the bypass exhaust heat recovery device 35c is provided along the bypass line 45. However, it is not necessary to provide the bypass exhaust heat recovery device 35c only for the purpose of discharging extra heat in the denitration reaction. In addition, the present embodiment is a modified example of the second embodiment. However, in the first embodiment, as in the present embodiment, the bypass line 45 and the bypass flow rate regulating unit 46 are provided and the bypass exhaust heat recovery device 35c may be provided as necessary.

### "Fifth embodiment of denitration device"

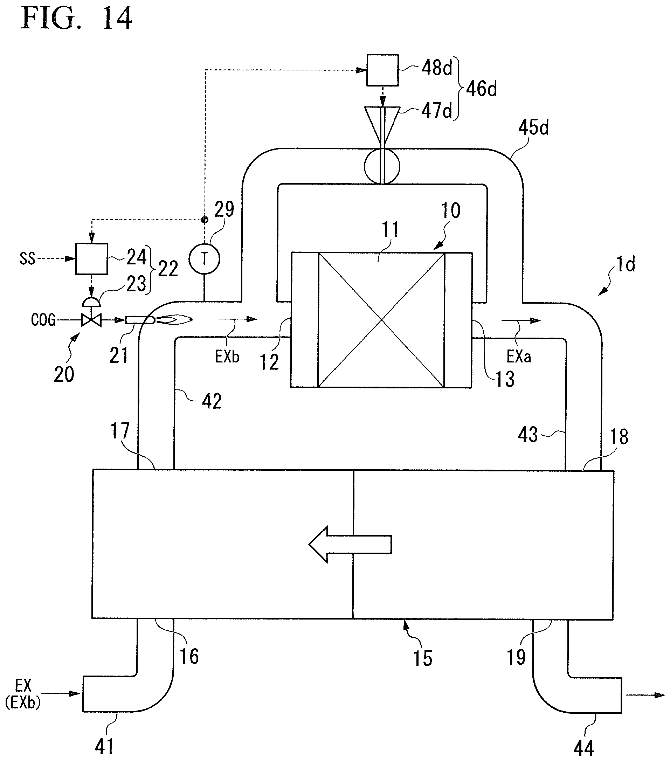

A denitration device according to a fifth embodiment of the present invention will be described with reference to Fig. 14.

As shown in Fig. 14, the denitration device 1d of the present embodiment is a modified example of the denitration device 1 of the first embodiment. A denitration device 1d of the present embodiment is obtained by adding a bypass line 45d and a bypass flow rate regulating unit 46d to the denitration device 1 of the first embodiment.

The bypass line 45d connects the second pre-denitration gas line 42 to the first denitrified gas line 43 and through it the pre-denitration gas EXb bypasses the denitration reactor 10.

The bypass flow rate regulating unit 46d includes a bypass valve 47d and bypass controller 48d. The bypass valve 47d is provided along the bypass line 45d and regulates a flow rate of the pre-denitration gas EXb that flows through the bypass line 45d. The bypass controller 48d controls a valve opening degree of the bypass valve 47d according to the temperature determined by the thermometer 29.

Next, operations of the denitration device 1d of the present embodiment will be described.

In the denitration device 1d of the present embodiment, as in the operation of the denitration device 1 of the first embodiment described with reference to Fig. 3, when an operation start signal SS is input to the controller 24 of the COG flow rate regulating valve 23 (S1), the COG flow rate regulating valve 23 opens, and the temperature regulating process (S2) starts. Further, in the denitration device 1d of the present embodiment, as in the denitration device 1 of the first embodiment, the heat exchanger 15 performs the heat exchanging process (S3), and the denitration reactor 10 performs the denitration process (S4).

In the present embodiment, a bypass process is performed as one procedure in the temperature regulating process (S2). In the bypass process, when the temperature determined by the thermometer 29 is higher than a predetermined temperature (for example, 290 °C), the bypass controller 48d opens the bypass valve 47d, and the valve opening degree of the bypass valve 47d is set as a valve opening degree corresponding to the temperature determined by the thermometer 29. As a result, a part of the pre-denitration gas EXb flows into the first denitrified gas line 43 through the bypass line 45d. In this case, a part of the pre-denitration gas EXb does not flow into the denitration reactor 10. Thus, an amount of heat generation due to the denitration reaction in the denitration reactor 10 decreases. Therefore, the temperature of the gas flowing into the heat exchanger 15 through the first denitrified gas line 43 decreases. As a result, an amount of heat heating the pre-denitration gas EXb in the heat exchanger 15 decreases, and the temperature of the pre-denitration gas EXb flowing into the denitration reactor 10 decreases. That is, the temperature determined by the thermometer 29 is equal to or lower than a predetermined temperature (for example, 290 °C).

In the present embodiment, after the denitration device is completed, when generation of extra heat in the denitration reaction is noticed, or when the gas composition of the pre-denitration gas EXb changes and extra heat is generated in the denitration reaction, compared to the second embodiment, it is possible to reduce the amount of repairing work for exhausting extra heat in the denitration reaction.

Here, in the present embodiment, an exhaust heat recovery device configured to recover heat of the gas that flows through the bypass line 45d or the first denitrified gas line 43 may be provided. In addition, the present embodiment is a modified example of the first embodiment. However, in the second embodiment, as in the present embodiment, the bypass line 45d and the bypass flow rate regulating unit 46d may be provided.

### "Modified examples of denitration reactor"

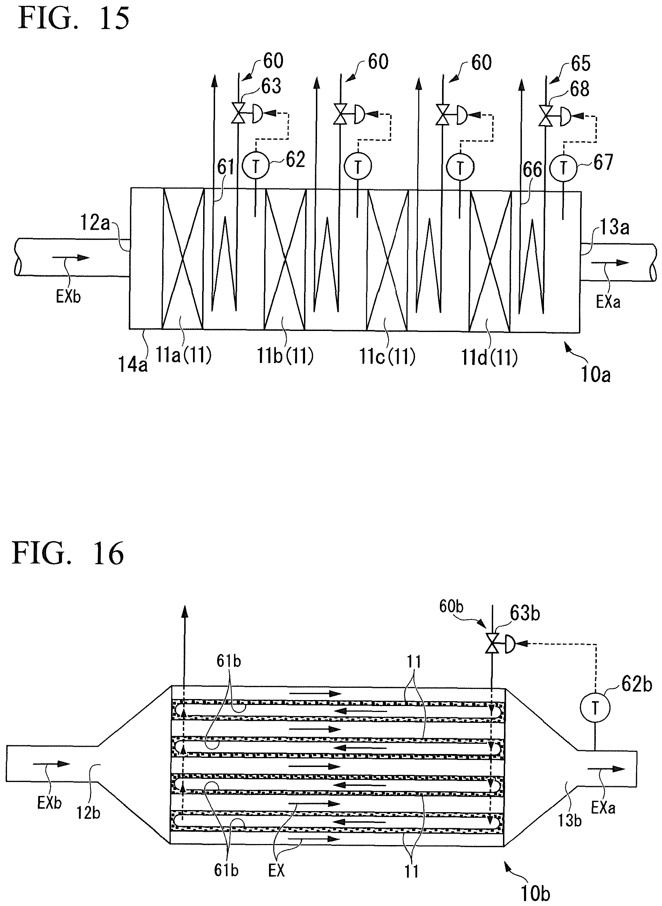

Modified examples of the denitration reactor in the above embodiments will be described with reference to Fig. 15 to Fig. 17.

A denitration reactor of a first modified example and a denitration reactor of a second modified example which will be described below are both an isothermal reactor.

As shown in Fig. 15, a denitration reactor 10a of the first modified example includes a reactor vessel 14a, a catalyst 11, a temperature distribution regulator 60, and an outlet temperature regulator 65. In the reactor vessel 14a, a pre-denitration gas inlet 12a into which the pre-denitration gas EXb flows and a denitrified gas outlet 13a from which the denitrified gas EXa flows out are formed. The catalyst 11 is distributed and disposed in the flow direction of the exhaust gas EX in the reactor vessel 14a. In the present modified example, a plurality of catalysts 11a to 11d are disposed in parallel at intervals in the flow direction of the exhaust gas EX. Therefore, the catalyst 11 is distributed and disposed in the flow direction of the exhaust gas EX. The flow direction of the exhaust gas EX in the reactor vessel 14a is a direction from the pre-denitration gas inlet 12a toward the denitrified gas outlet 13a in the present modified example. The temperature distribution regulator 60 regulates a temperature distribution of the catalyst 11 so that temperatures of the catalysts 11a to 11d at all positions in the flow direction of the exhaust gas EX fall within a predetermined temperature range. The temperature distribution regulator 60 includes a heat exchanger 61, a thermometer 62, and a refrigerant flow rate regulating valve 63. The heat exchanger 61 is disposed in the reactor vessel 14a and between the plurality of catalysts 11a to 11d, and exchanges heat between the exhaust gas EX that flows between the plurality of catalysts 11a to 11d and a refrigerant. The thermometer 62 is disposed between the plurality of catalysts 11a to 11d and on the downstream side of the flow of the exhaust gas EX from the heat exchanger 61 and determines the temperature of the exhaust gas EX. The refrigerant flow rate regulating valve 63 regulates a flow rate of the refrigerant flowing into the heat exchanger 61 based on the temperature determined by the thermometer 62. Specifically, the refrigerant flow rate regulating valve 63 regulates a flow rate of the refrigerant flowing into the heat exchanger 61 so that the temperature determined by the thermometer 62 is, for example, within a target temperature range (temperature distribution regulating process). As in the temperature distribution regulator 60, the outlet temperature regulator 65 includes a heat exchanger 66, a thermometer 67, and a refrigerant flow rate regulating valve 68. The heat exchanger 66 is disposed in the reactor vessel 14a and on the downstream side of the catalyst 11d furthest downstream among the plurality of catalysts 11a to 11d and exchanges heat between the exhaust gas EX that has passed through the catalyst 11d furthest downstream and the refrigerant. The thermometer 67 determines the temperature of the exhaust gas EX that has passed through the heat exchanger 66. The refrigerant flow rate regulating valve 68 regulates a flow rate of the refrigerant flowing into the heat exchanger 66 based on the temperature determined by the thermometer 67. Specifically, the refrigerant flow rate regulating valve 68 regulates a flow rate of the refrigerant flowing into the heat exchanger 66 so that the temperature determined by the thermometer 67 is, for example, 290 °C or less (outlet temperature regulating process).

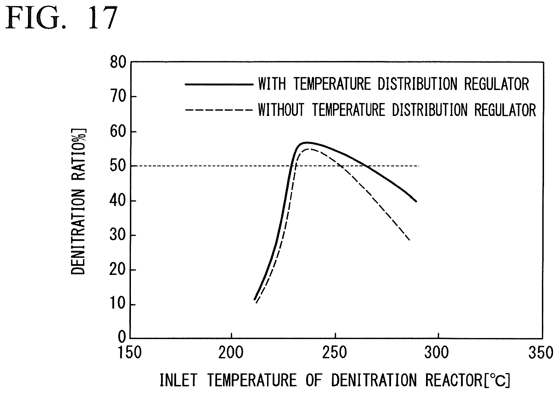

As described above, in the present modified example, since the heat exchanger 61 is disposed between the plurality of catalysts 11a to 11d, a temperature difference in the exhaust gas EX between the plurality of catalysts 11a to 11d can be reduced. As a result, a temperature difference between the plurality of catalysts 11a to 11d can be reduced. In other words, temperatures of the plurality of catalysts 11a to 11d fall within a predetermined temperature range. As a result, as shown in Fig. 17, compared to when no temperature distribution regulator 60 is provided (indicated by a dashed line in the drawing), in the present modified example (indicated by a solid line in the drawing), it is possible to increase the denitration ratio at the outlet of the denitration reactor 10a. As shown in Fig. 17, while the exhaust gas temperature at the inlet of the denitration reactor 10a is lower than the exhaust gas temperature at which the maximum denitration ratio is reached, there is no large difference between the denitration ratio when no temperature distribution regulator 60 is provided and the denitration ratio of the present modified example. On the other hand, when the exhaust gas temperature at the inlet of the denitration reactor 10a is higher than the exhaust gas temperature at which the maximum denitration ratio is reached, the denitration ratio of the present modified example is higher than the denitration ratio when no temperature distribution regulator 60 is provided.

At the position of the inlet of the reactor vessel 14a, the actual temperature in the imaginary plane perpendicular to the first direction from the pre-denitration gas inlet 12a toward the denitrified gas outlet 13a has a variation. For example, based on the average temperature of the pre-denitration gas immediately after flowing into the reactor vessel 14a, that is, the average inlet gas temperature, the actual temperature in the imaginary plane may have a variation of about ±10 to 20 °C. When the average inlet gas temperature is 260 °C (higher than the exhaust gas temperature at which the maximum denitration ratio is reached) and the actual temperature in the imaginary plane has a variation of about ±10 to 20 °C, if no temperature distribution regulator 60 is provided, as shown in Fig. 17, the denitration ratio at the outlet of the denitration reactor 10a is less than 50%. On the other hand, similarly, when the average inlet gas temperature is 260 °C and the actual temperature in the imaginary plane has a variation of about ± 10 to 20 °C, if the temperature distribution regulator 60 is provided, the denitration ratio at the outlet of the denitration reactor 10a is 50% or more.

Here, in Fig. 17, the denitration ratio when the temperature distribution regulator 60 is provided is a denitration ratio obtained when the heat exchanger 61 having a predetermined specification is provided and a refrigerant flows at a predetermined flow rate toward the heat exchanger 61. Therefore, the denitration ratio when the temperature distribution regulator 60 is provided is a denitration ratio that is different from the denitration ratio shown in Fig. 17 when specifications of the heat exchanger 61 and a flow rate of the refrigerant change. However, when the exhaust gas temperature at the inlet of the denitration reactor 10a is higher than the exhaust gas temperature at which the maximum denitration ratio is reached, a trend in which the denitration ratio when the temperature distribution regulator 60 is provided is higher than the denitration ratio when no temperature distribution regulator 60 is provided is the same even if specifications of the heat exchanger 61 and the like change.

Further, in the present modified example, the exhaust gas temperature at the outlet of the denitration reactor 10a can be reduced to a predetermined temperature or lower.

As shown in Fig. 16, a denitration reactor 10b of the second modified example includes a reactor vessel 14b, a heat transfer member 61b, the catalyst 11, and a temperature distribution regulator 60b. In the reactor vessel 14b, a pre-denitration gas inlet 12b into which the pre-denitration gas EXb flows and a denitrified gas outlet 13b from which the denitrified gas EXa flows out are formed. The heat transfer member 61b is a heat transfer tube or a heat transfer plate. The heat transfer member 61b is disposed in the reactor vessel 14b and divides the reactor vessel 14b into a refrigerant space in which a refrigerant flows and an exhaust gas space in which the exhaust gas EX flows. The heat transfer member 61b extends longer in the flow direction of the exhaust gas EX in the reactor vessel 14b. The catalyst 11 is formed on the surface of the heat transfer member 61b on the surface on the side of the exhaust gas space. Thus, the catalyst 11 is distributed and disposed in the flow direction of the exhaust gas EX. The refrigerant flows in from the downstream side of the refrigerant space and flows out from the upstream side of the refrigerant space. The temperature distribution regulator 60b regulates the temperature distribution of the catalyst 11 so that the temperature of the catalyst 11 at all positions in the flow direction of the exhaust gas EX falls within a predetermined temperature range. The temperature distribution regulator 60b includes the heat transfer member 61b as a heat exchanger, a thermometer 62b, and a refrigerant flow rate regulating valve 63b. The thermometer 62b determines the temperature of the exhaust gas EX that has passed through the catalyst 11. The refrigerant flow rate regulating valve 63b regulates a flow rate of the refrigerant flowing into the refrigerant space in the reactor vessel 14b based on the temperature determined by the thermometer 62b. Specifically, the refrigerant flow rate regulating valve 63b regulates a flow rate of the refrigerant flowing into the refrigerant space so that the temperature determined by the thermometer 62b is, for example, within a target temperature range (temperature distribution regulating process).

As described above, in the present modified example, the temperature of the catalyst 11 at all positions in the flow direction of the exhaust gas EX falls within a predetermined temperature range. As a result, in the present modified example, as in the first modified example, it is possible to increase the denitration ratio at the outlet of the denitration reactor 10b.

Here, in the present modified example, heat is exchanged between the catalyst 11 and the refrigerant, and the temperature distribution of the catalyst 11 is regulated. On the other hand, in the first modified example, when heat is exchanged between the exhaust gas EX and the refrigerant and the temperature distribution of the exhaust gas EX is regulated, the temperature distribution of the catalyst 11 is indirectly regulated. That is, when the temperature distribution of the catalyst 11 is regulated, the temperature distribution of the catalyst 11 may be directly regulated, and the temperature distribution of the catalyst 11 may be indirectly regulated.

In addition, various refrigerants are used in the above embodiments and modified examples. In the above, as the refrigerant, a first refrigerant that flows through the exhaust heat recovery device 35 of the second embodiment, a second refrigerant that flows through the bypass exhaust heat recovery device 35c of the third embodiment, a third refrigerant that flows through the heat exchanger 61 of the first modified example, a fourth refrigerant that flows through the refrigerant space in the heat transfer member 61 b of the second modified example, and the like may be used. These refrigerants may be the same refrigerant (for example, water) or may be different refrigerants.

### "Embodiment of exhaust gas treatment facility"

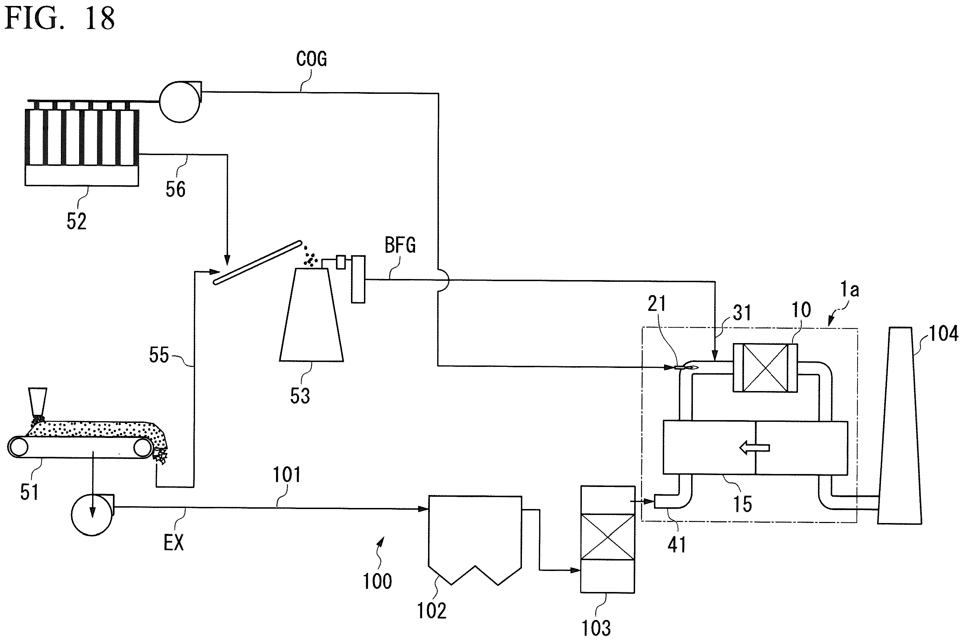

An exhaust gas treatment facility according to one embodiment of the present invention will be described with reference to Fig. 18.

Many ironworks include a sintering furnace 51 for producing a sintered ore 55 which is an agglomerate of ores by mixing lime with iron ore as a raw material, a coke furnace 52 for producing coke 56 by baking coal, a blast furnace 53 for putting the coke 56 into the sintered ore 55 and extracting iron in the sintered ore 55, and an exhaust gas treatment facility for treating the exhaust gas EX from the sintering furnace 51. An exhaust gas treatment facility 100 of the present embodiment is an exhaust gas treatment facility in the ironworks.

The exhaust gas treatment facility 100 of the present embodiment includes the denitration device 1a in the second embodiment, an exhaust gas line 101 for guiding the exhaust gas EX from the sintering furnace 51 to the denitration device 1a, and a dust collector 102 and a desulfurizer 103 provided in the exhaust gas line 101.

The exhaust gas line 101 is connected to the first pre-denitration gas line 41 in the denitration device 1a. The dust collector 102 may be either a wet type dust collector or a dry type dust collector. In addition, as the dust collector 102, both a wet type dust collector and a dry type dust collector may be provided.

The desulfurizer 103 is, for example, a device that wets the exhaust gas EX using limestone as an absorber, and extracts sulfur oxides (hereinafter referred to as SOx) that has reacted with limestone as gypsum.

In the exhaust gas treatment facility 100 of the present embodiment, dust is removed from the exhaust gas EX by the dust collector 102, an SO_{X} component in the exhaust gas EX is removed in the desulfurizer 103, and NOx in the exhaust gas EX is then reduced in the denitration device 1a. The exhaust gas EX from which NOx is reduced is discharged to the atmosphere from a chimney 104.

COG generated in the coke furnace 52 is supplied to the burner 21 of the denitration device 1a of the present embodiment. In addition, BFG generated in the blast furnace 53 is supplied to the performance improving gas line 31 of the denitration device 1a of the present embodiment as a denitration performance improving gas PIG.

In many cases, the ironworks includes a converter furnace for removing a carbon content and impurities from pig iron that is iron in the sintered ore extracted in the blast furnace 53 in addition to the sintering furnace 51, the coke furnace 52, and the blast furnace 53 described above. In this case, in the performance improving gas line 31 of the denitration device 1a, LDG generated in the converter furnace may be used as a denitration performance improving gas PIG, and a mixed gas of BFG and LDG may be used as a denitration performance improving gas PIG.

Here, the denitration device included in the exhaust gas treatment facility 100 of the present embodiment is the denitration device 1a in the second embodiment. However, the denitration device may be any one of the denitration device 1 in the first embodiment, the denitration device 1b in the third embodiment, and the denitration device 1c in the fourth embodiment.

The exhaust gas treatment facility 100 of the present embodiment treats the exhaust gas EX from the sintering furnace 51 in the ironworks. However, when CO and NOx are contained in the exhaust gas EX, the denitration device 1a (or the denitration devices 1, 1b, and 1c) and the exhaust gas treatment facility 100 including the same may treat the exhaust gas EX from a gas generation source other than the sintering furnace 51.

### [Industrial Applicability]

According to an aspect of the present invention, it is possible to reduce a time lag from when flowing of an exhaust gas starts until a treatment of nitrogen oxides starts, and it is possible to stably treat nitrogen oxides thereafter.

### [Reference Signs List]

1, 1a, 1b, 1c, 1d Denitration device
10, 10a, 10b Denitration reactor
11, 11a, 11b, 11c, 11d Catalyst
12, 12a, 12b Pre-denitration gas inlet
13, 13a, 13b Denitrified gas outlet
14a, 14b Reactor vessel
15 Heat exchanger
20, 20b Heater
21 Heating unit or burner
22, 22b Heating amount regulating unit
23 COG flow rate regulating valve
24, 24b Controller
25 Denitration ratio calculation unit
26 Target changing unit
27 Instruction unit
29 Thermometer
30 Performance improving gas supply device
31 Performance improving gas line
32 Performance improving gas flow rate regulating valve
33 Controller
35 Exhaust heat recovery device
35c Bypass exhaust heat recovery device
39 Densitometer
39a First densitometer
39b Second densitometer
41 First pre-denitration gas line
42 Second pre-denitration gas line
43 First denitrified gas line
44 Second denitrified gas line
45, 45d Bypass line
46, 46d Bypass flow rate regulating unit
47, 47d Bypass valve
48, 48d Bypass controller
60, 60b Temperature distribution regulator
61 Heat exchanger
61b Heat transfer member (heat exchanger)
62, 62b Thermometer
63, 63b Refrigerant flow rate regulating valve
65 Outlet temperature regulator
66 Heat exchanger
67 Thermometer
68 Refrigerant flow rate regulating valve
100 Exhaust gas treatment facility
101 Exhaust gas line
102 Dust collector
103 Desulfurizer
104 Chimney
EX Exhaust gas
EXa Denitrified gas
EXb Pre-denitration gas
PIG Denitration performance improving gas
SS Operation start signal

## Claims

1. A denitration device comprising:
a denitration reactor filled with a catalyst containing Ir that reduces nitrogen oxides contained in an exhaust gas;
a heat exchanger configured to exchange heat between a pre-denitration gas and a denitrified gas, and cool the denitrified gas and heat the pre-denitration gas, the pre-denitration gas being an exhaust gas that has not flowed into the denitration reactor, the denitrified gas being an exhaust gas flowing out from the denitration reactor; and
a heater that is able to regulate a heating amount by which the pre-denitration gas that has passed through the heat exchanger is heated.

2. The denitration device according to claim 1, comprising
a thermometer configured to determine a temperature of a gas that has not flowed into the denitration reactor on the side of the denitration reactor relative to the heater,
wherein the heater includes a heating unit configured to heat a gas that flows into the denitration reactor and a heating amount regulating unit configured to regulate a heating amount produced by the heating unit so that a temperature determined by the thermometer falls within a target temperature range.

3. The denitration device according to claim 2,
wherein the heating amount regulating unit regulates a heating amount produced by the heating unit so that the temperature determined by the thermometer falls within the target temperature range before the exhaust gas flows into the denitration reactor from a gas generation source that has started to operate.

4. The denitration device according to claim 2 or 3,
wherein the target temperature range is within a range of 200 to 300 °C.

5. The denitration device according to any one of claims 2 to 4, comprising
a first densitometer configured to determine a concentration of nitrogen oxides in the pre-denitration gas; and
a second densitometer configured to determine a concentration of nitrogen oxides in the denitrified gas,
wherein the heating amount regulating unit includes
a denitration ratio calculation unit configured to calculate a denitration ratio in the denitration reactor from a concentration of nitrogen oxides determined by the first densitometer and a concentration of nitrogen oxides determined by the second densitometer;
a target changing unit configured to change the target temperature range so that the denitration ratio increases; and
an instruction unit configured to instruct the heating unit regarding a heating amount produced by the heating unit so that the temperature determined by the thermometer falls within the target temperature range.

6. The denitration device according to claim 5,
wherein the target changing unit changes the target temperature range so that the denitration ratio is equal to or greater than a predetermined value.

7. The denitration device according to any one of claims 2 to 6, comprising
a performance improving gas supply device configured to supply a denitration performance improving gas containing at least one of hydrogen and carbon monoxide to the pre-denitration gas.

8. The denitration device according to claim 7, comprising
a densitometer configured to determine a concentration of nitrogen oxides in the denitrified gas,
wherein the performance improving gas supply device includes a performance improving gas flow rate regulating valve configured to regulate a flow rate of the denitration performance improving gas supplied to the pre-denitration gas and a controller configured to control a valve opening degree of the performance improving gas flow rate regulating valve according to the concentration of nitrogen oxides determined by the densitometer.

9. The denitration device according to claim 7 or 8,
wherein the target temperature range is within a range of 170 to 300 °C.

10. The denitration device according to any one of claims 1 to 9,
wherein the denitration reactor includes
a reactor vessel;
the catalyst that is distributed and disposed in a flow direction of the exhaust gas in the reactor vessel; and
a temperature distribution regulator configured to regulate a temperature distribution of the catalyst so that a temperature of the catalyst at all positions in the flow direction falls within a predetermined temperature range.

11. The denitration device according to claim 10,
wherein the temperature distribution regulator includes a heat exchanger configured to exchange heat between the catalyst or the exhaust gas in the reactor vessel and a refrigerant.

12. The denitration device according to any one of claims 1 to 11, comprising
an exhaust heat recovery device configured to exchange heat between the denitrified gas that flows out from the denitration reactor and has not flowed into the heat exchanger and a refrigerant, and cools the denitrified gas and heats the refrigerant.

13. The denitration device according to any one of claims 1 to 11, comprising
a bypass line through which the denitrified gas that flows out from the denitration reactor and has not flowed into the heat exchanger bypasses the heat exchanger; and
a bypass flow rate regulator configured to regulate a flow rate of the denitrified gas that flows through the bypass line.

14. The denitration device according to claim 13, comprising
a bypass exhaust heat recovery device that is disposed in the bypass line and on the downstream side of a flow of the denitrified gas relative to the bypass flow rate regulator, exchanges heat between the denitrified gas and a refrigerant, and cools the denitrified gas and heats the refrigerant.

15. The denitration device according to any one of claims 1 to 12, comprising
a bypass line through which the pre-denitration gas bypasses the denitration reactor and converges with the denitrified gas; and
a bypass flow rate regulator configured to regulate a flow rate of the pre-denitration gas that flows through the bypass line.

16. A denitration method that performs:
a denitration process in which nitrogen oxides contained in an exhaust gas are reduced by a catalyst containing Ir in a denitration reactor;
a heat exchanging process in which a pre-denitration gas which is an exhaust gas that has not been treated in the denitration process exchanges heat with a denitrified gas which is an exhaust gas that is treated in the denitration process, and the denitrified gas is cooled, but the pre-denitration gas is heated; and
a temperature regulating process in which a temperature of the pre-denitration gas is regulated so that the temperature of the pre-denitration gas falls within a target temperature range.

17. The denitration method according to claim 16,
wherein, in the temperature regulating process, a temperature of the gas that flows into the denitration reactor is regulated so that the temperature of the gas flowing into the denitration reactor falls within a target temperature range before the exhaust gas flows into the denitration reactor from a gas generation source that has started to operate.

18. The denitration method according to claim 16 or 17,
wherein the target temperature range is within a range of 200 to 300 °C.

19. The denitration method according to any one of claims 16 to 18,
wherein, in the temperature regulating process,
a concentration of nitrogen oxides in the pre-denitration gas and a concentration of nitrogen oxides in the denitrified gas are determined;
a denitration ratio in the denitration reactor is calculated from the concentration of nitrogen oxides in the pre-denitration gas and the concentration of nitrogen oxides in the denitrified gas;
the target temperature range changes so that the denitration ratio increases; and the temperature of the pre-denitration gas is regulated so that the temperature of the pre-denitration gas falls within the target temperature range.

20. The denitration method according to claim 19,
wherein, in the temperature regulating process, the target temperature range changes so that the denitration ratio is equal to or greater than a predetermined value.

21. The denitration method according to any one of claims 16 to 20,
wherein a performance improving gas supply process in which a denitration performance improving gas containing at least one of hydrogen and carbon monoxide is supplied to the pre-denitration gas is performed.

22. The denitration method according to claim 21,
wherein, in the performance improving gas supply process, the concentration of nitrogen oxides in the denitrified gas is determined, and a flow rate of the denitration performance improving gas supplied to the pre-denitration gas is regulated according to the concentration of nitrogen oxides.

23. The denitration method according to claim 21 or 22,
wherein the target temperature range is within a range of 170 to 300 °C.

24. The denitration method according to any one of claims 16 to 23,
wherein the denitration reactor includes a reactor vessel and the catalyst that is distributed and disposed in a flow direction of the exhaust gas in the reactor vessel, and
wherein a temperature distribution regulating process in which a temperature distribution of the catalyst is regulated so that a temperature of the catalyst at all positions in the flow direction falls within a predetermined temperature range is performed.

25. The denitration method according to any one of claims 16 to 24,
wherein the temperature regulating process includes an exhaust heat recovering process in which the denitrified gas that is treated in the denitration process and of which heat is not exchanged in the heat exchanging process exchanges heat with a refrigerant, and the denitrified gas is cooled, and the refrigerant is heated.

26. The denitration method according to any one of claims 16 to 25,
wherein the temperature regulating process includes a bypass process in which a pre-denitration gas does not exchange heat with at least a part of the denitrified gas of which heat is not exchanged with the pre-denitration gas in the heat exchanging process.

27. The denitration method according to any one of claims 16 to 25,
wherein the temperature regulating process includes a bypass process in which at least a part of the pre-denitration gas converges with the denitrified gas.
